(19) Europäisches Patentamt
European Patent Office
Office européen des brevets

(11) **EP 4 691 828 A1**

(12) **EUROPEAN PATENT APPLICATION**
published in accordance with Art. 153(4) EPC

(43) Date of publication:
**11.02.2026   Bulletin 2026/07**

(21) Application number: **24778540.5**

(22) Date of filing: **15.01.2024**

(51) International Patent Classification (IPC):
***B60L 15/20*** *(2006.01)*          ***B60L 9/18*** *(2006.01)*
***B60W 40/068*** *(2012.01)*

(52) Cooperative Patent Classification (CPC):
**B60L 9/18; B60L 15/20; B60W 30/02;
B60W 40/068; Y02T 10/72**

(86) International application number:
**PCT/JP2024/000875**

(87) International publication number:
**WO 2024/202394 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **28.03.2023   JP 2023050952**

(71) Applicant: **Hitachi Construction Machinery Co.,
Ltd.
Tokyo 110-0015 (JP)**

(72) Inventors:
• **ICHINOSE Masanori
  Tokyo 100-8280 (JP)**
• **UOTSU Shinichi
  Tsuchiura-shi, Ibaraki 300-0013 (JP)**
• **TAKAHASHI Nobuyoshi
  Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54) **ELECTRIC TRANSPORT VEHICLE AND OPERATION CONTROL SYSTEM FOR SAME**

(57)    An electrically driven hauling vehicle includes: wheel load sensors that sense information on wheel loads of driving and driven wheels; and a controller that controls an electric motor for driving the driving wheels. The controller includes: a wheel load computing section that computes the wheel loads based on the information sensed by the wheel load sensors; a tire force computing section that computes a tire force of at least one of the driving and driven wheels; a slip index computing section that computes a slip index of at least one of the driving and driven wheels; a friction coefficient computing section that computes a friction coefficient by dividing the tire force as a computation result by the wheel load as a computation result; and a friction coefficient ratio computing section that computes a friction coefficient ratio by dividing the friction coefficient as a computation result by the slip index as a computation result. The controller controls the driving of the electric motor based on the friction coefficient ratio as a computation result.

[FIG. 3]

**Description**

Technical Field

The present invention relates to an electrically driven hauling vehicle that travels on a driving force of an electric motor and an operation control system therefor, and more particularly relates to an electrically driven hauling vehicle such as a dump truck that transports a heavy object such as ore or soil excavated at a mine or the like and an operation control system therefor.

Background Art

At a strip mine or the like, a hauling vehicle such as a dump truck transports excavated ore or soil. The hauling vehicle generally has a bed to be loaded with a large amount of transport object at a loading place where a mineral is excavated, travels on a transport path in a state of being loaded with the transport object, and dumps (discharges) the transport object at a dumping place. The hauling vehicle is capable of inclining the bed, and is configured to drop the loaded transport object from the bed to the rear of the vehicle. The hauling vehicle after having the bed emptied travels in the transport path again, and returns to the loading place. The hauling vehicle performs work by similarly repeating the loading, the transportation, and the dumping many times.

Electrification of the above-described hauling vehicle for use at a mine is underway in recent years, and a hauling vehicle that travels by using an electric motor fitted to rear wheels thereof as a driving source has become common. By using an electric motor as a driving source, this electrically driven hauling vehicle not only enables a reduction in maintenance cost through the removal of a transmission but also enables an improvement in energy efficiency through the electrification, a precise management of driving torque, and the like.

Further, with an objective of improvement in work efficiency of the mine site as a whole, an operation control system may be constructed which controls the work contents of electrically driven hauling vehicles within the site. It has become common for the operation control system to be configured to give various commands related to work with regard to a travelling path, a speed limit, and the like to the individual electrically driven hauling vehicles via radio or the like.

The weight of the transport object moved per unit time is generally used as an index indicating the efficiency of transportation work in the case of such an electrically driven hauling vehicle. This index of the work efficiency indicates that the loading of the electrically driven hauling vehicle with as large an amount of transport object as possible at a time and travelling at as fast a speed as possible lead to an improvement in the work efficiency. The load capacity of the electrically driven hauling vehicles is fixed for each vehicle, and a speed limit at which travelling can be performed safely is set for each mine site. There is thus an upper limit to the work efficiency. Further, when road surface conditions have deteriorated, for example, as a result of a road surface becoming muddy at the time of bad weather or the like, the above-described speed limit is set lower than that at the time of fine weather, or an operator individually judges the road surface conditions and decelerates to a safe travelling speed. Therefore, a decrease in the work efficiency as compared with a case of fine weather is inevitable. In order to suppress a decrease in the work efficiency as much as possible while ensuring safety under such conditions, it is necessary to reduce a speed decrease as much as possible in a range in which travelling can be performed safely. Accordingly, it is desired to accurately determine the road surface conditions, particularly the slipperiness of the road surface, before a slip occurs, and travel at an appropriate travelling speed that can balance safety and the work efficiency.

A technology described in Patent Document 1 is publicly known as a method for determining the slipperiness of the road surface. A tire ground contact state estimating device described in Patent Document 1 corrects estimated road surface friction coefficients of front and rear wheels (steering wheels and non-steering wheels) with an objective of improving accuracy of estimation of a tire ground contact state. As a concrete example, the self-aligning torque of the front wheels (which torque will hereinafter be referred to as front wheel SAT) is estimated on the basis of a steering angle and a vehicle speed sensed by sensing means and the estimated road surface friction coefficients of the front wheels (steering wheels), the front wheel SAT is sensed by sensing means, and a front wheel SAT estimation error defined by a difference between the estimated value and the sensed value of the front wheel SAT is computed, and the road surface friction coefficients are corrected according to the front wheel SAT estimation error as a result of the computation.

Prior Art Document

Patent Document

Patent Document 1: JP2012-116360-A

Summary of the Invention

Problem to be Solved by the Invention

In the technology described in Patent Document 1, the sensed value of the front wheel SAT is obtained from a torque sensor value, an assist motor current value, and a steering wheel angle in electrically driven power steering. That is, the technology is assumed to be intended for an ordinary vehicle such as an automobile provided with an electrically driven power steering system including a steering assist motor for which the torque sensor value and the assist motor current value can be sensed.

On the other hand, the above-described electrically driven hauling vehicle for use at a mine generally has a configuration without an electrically driven steering mechanism such as the electrically driven power steering system described in Patent Document 1 because of the magnitude of vehicle weight of the electrically driven hauling vehicle. It is therefore difficult to apply the technology described in Patent Document 1 that uses the torque sensor value and the assist motor current value in electrically driven power steering as a technology for determining the slipperiness of the road surface regarding the above-described electrically driven hauling vehicle.

In addition, the above-described electrically driven hauling vehicle may travel in a state of having the transport object loaded on the bed and may travel in a state in which the bed is empty. Thus, loads applied in a vertical direction to the wheels (which loads may hereinafter be referred to as wheel loads) vary greatly due to an effect of the loading weight of the transport object. In addition, when the transport object is loaded on the bed, the center of gravity of the electrically driven hauling vehicle is located at a very high position, and therefore the wheel loads applied to the respective wheels are significantly changed depending on acceleration or deceleration or turning motion. Because the above-described electrically driven hauling vehicle has such characteristics, the use of the road surface friction coefficient estimating method described in Patent Document 1 intended for an ordinary vehicle in the above-described electrically driven hauling vehicle may decrease the estimation accuracy. This is because the road surface friction coefficients are obtained by dividing the wheel loads by frictional forces occurring against the tires, and the wheel loads of an ordinary vehicle whose vehicle weight hardly changes are set to be a fixed value or an estimated value computed from a model.

The present invention has been made to solve the above-described problems. It is an object of the present invention to provide an electrically driven hauling vehicle and an operation control system therefor that can control travelling by using an index that enables the slipperiness of a road surface to be determined accurately without measuring a steering force under conditions where wheel loads vary.

Means for Solving the Problem

The present application includes a plurality of means for solving the above-described problems. To cite an example of the means, there is provided an electrically driven hauling vehicle including: a plurality of driving wheels and a plurality of driven wheels; a wheel speed sensor that senses each of rotational speeds of the plurality of driving wheels and the plurality of driven wheels; an electric motor that drives the plurality of driving wheels; and a controller that controls the electric motor. The electrically driven hauling vehicle includes a wheel load sensor that senses each of pieces of information on wheel loads as loads applied in a vertical direction to the plurality of driving wheels and the plurality of driven wheels. The controller has functional sections including a wheel load computing section configured to compute the wheel load based on the information sensed by the wheel load sensor, a tire force computing section configured to compute a tire force as a frictional force that occurs against at least one of the plurality of driving wheels and the plurality of driven wheels on a road surface, a slip index computing section configured to compute a slip index indicating a degree of slipping that occurs at at least one of the plurality of driving wheels and the plurality of driven wheels, a friction coefficient computing section configured to compute a friction coefficient by dividing the tire force as a result of the computation of the tire force computing section by the wheel load as a result of the computation of the wheel load computing section, and a friction coefficient ratio computing section configured to compute a friction coefficient ratio by dividing the friction coefficient as a result of the computation of the friction coefficient computing section by the slip index as a result of the computation of the slip index computing section. The controller controls the driving of the electric motor based on the friction coefficient ratio as a result of the computation of the friction coefficient ratio computing section.

Advantages of the Invention

According to the present invention, the friction coefficient ratio correlated with a maximum friction coefficient of the road surface as an index that enables the slipperiness of the road surface to be determined is computed by dividing the friction coefficient computed by using an accurate wheel load obtained on the basis of the sensed information of the wheel load sensor by the slip index, and the driving of the electric motor is controlled on the basis of the friction coefficient ratio as a result of the computation. It is therefore possible to control travelling while using an index that enables the slipperiness of the road surface to be determined accurately without measuring a steering force under conditions where the wheel load varies.

Problems, configurations, and effects other than those described above will be made apparent by the description of the following embodiments.

Brief Description of the Drawings

[FIG. 1] FIG. 1 is an external view illustrating a dump truck as an electrically driven hauling vehicle according to a first embodiment of the present invention.

[FIG. 2] FIG. 2 is a sectional view illustrating a structure of a suspension constituting a part of the electrically driven hauling vehicle according to the first embodiment.

[FIG. 3] FIG. 3 is a block diagram illustrating a configuration of hardware and functional sections of a controller in the electrically driven hauling vehicle according to the first embodiment.

[FIG. 4] FIG. 4 is a graph illustrating typical relation between a first directional tire force (tire longitudinal force) and a slip ratio.

[FIG. 5] FIG. 5 is a graph illustrating relation between a first friction coefficient (friction coefficient with regard to the first directional tire force) of a road surface obtained from the graph illustrated in FIG. 4 and the slip ratio.

[FIG. 6] FIG. 6 is a flowchart illustrating an example of a processing procedure of road surface state determination processing in the controller of the electrically driven hauling vehicle according to the first embodiment illustrated in FIG. 3.

[FIG. 7] FIG. 7 is a block diagram illustrating a configuration of functional sections of a controller in an electrically driven hauling vehicle according to a second embodiment of the present invention.

[FIG. 8] FIG. 8 is a graph illustrating typical relation between a second directional tire force (tire lateral force) and a slip angle.

[FIG. 9] FIG. 9 is a graph illustrating relation between a second friction coefficient (friction coefficient with regard to the second directional tire force) of the road surface obtained from the graph illustrated in FIG. 8 and the slip angle.

[FIG. 10] FIG. 10 is an explanatory diagram schematically illustrating forces occurring at wheels (tires) and the moment of the vehicle during turning travelling in the electrically driven hauling vehicle.

[FIG. 11] FIG. 11 is a flowchart illustrating an example of a processing procedure of road surface state determination processing in the controller of the electrically driven hauling vehicle according to the second embodiment illustrated in FIG. 7.

[FIG. 12] FIG. 12 is an explanatory diagram illustrating a power transmitting mechanism from an electric motor to a driving wheel in an electrically driven hauling vehicle according to a third embodiment of the present invention, and illustrating a force that occurs at the driving wheel.

[FIG. 13] FIG. 13 is a block diagram illustrating a configuration of functional sections of a controller in an electrically driven hauling vehicle according to a fourth embodiment of the present invention.

[FIG. 14] FIG. 14 is a block diagram illustrating a configuration of an operation control system for electrically driven hauling vehicles according to an embodiment of the present invention.

Modes for Carrying Out the Invention

Embodiments of an electrically driven hauling vehicle and an operation control system therefor according to the present invention will hereinafter be described with reference to the drawings. In the present embodiments, the description will be made by taking a dump truck as an example of the electrically driven hauling vehicle. Incidentally, a forward, a rearward, a left, and a right direction described in the present specification represent directions as viewed from an operator aboard the electrically driven hauling vehicle.

[First Embodiment]

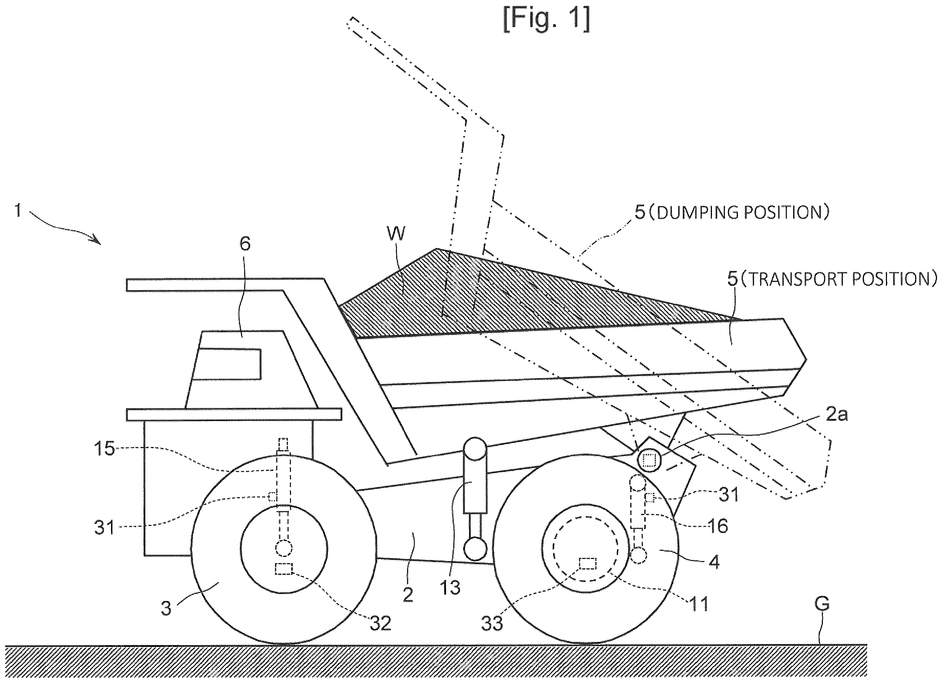

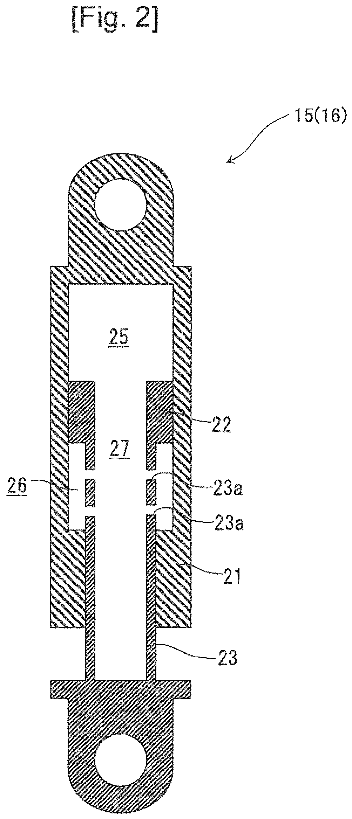

A general configuration of a dump truck as an electrically driven hauling vehicle according to a first embodiment will first be described with reference to FIG. 1 and FIG. 2. FIG. 1 is an external view illustrating the dump truck as the electrically driven hauling vehicle according to the first embodiment of the present invention. FIG. 2 is a sectional view illustrating a structure of a suspension constituting a part of the electrically driven hauling vehicle according to the first embodiment.

In FIG. 1, a dump truck 1 for use at a mine as the electrically driven hauling vehicle carries and transports a load W (transport object) such as ore or soil mined at the mine or the like, and is configured to travel on a driving force of an electric motor 11. The dump truck 1 includes: a vehicle body frame 2 as a supporting structural body that extends in a forward-rearward direction (left-right direction in FIG. 1); front wheels 3 and rear wheels 4 including tires as wheels respectively rotatably provided to both of a left side and a right side in a front portion and a rear portion of the vehicle body frame 2; a bed 5 raisably and lowerably (tiltably) mounted on the vehicle body frame 2; and a cabin 6 installed on the front portion of the vehicle body frame 2.

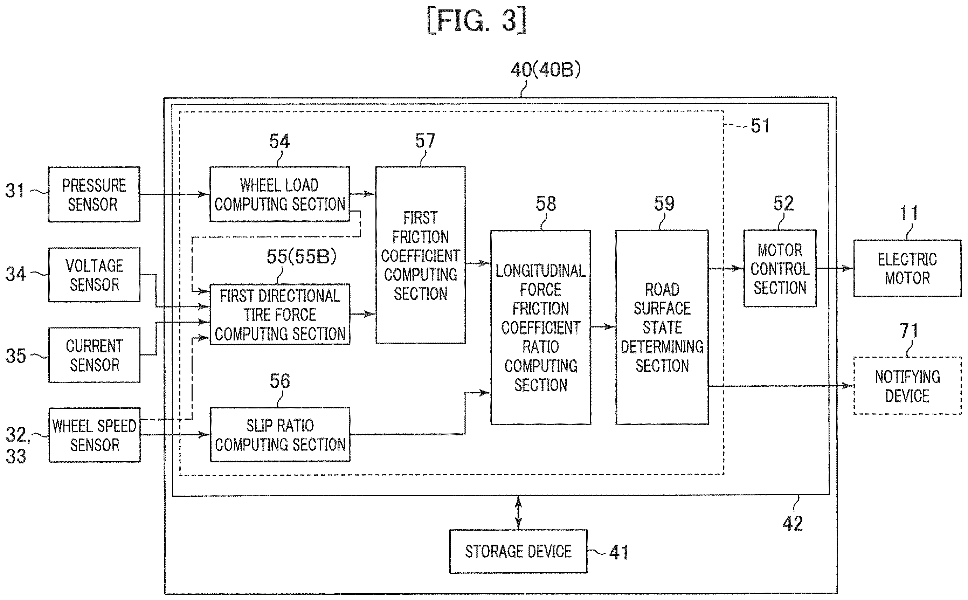

The front wheels 3 are, for example, driven wheels configured to be steered by the operator via a steering mechanism. The rear wheels 4 are driving wheels configured to be fitted with the electric motor 11, and rotationally driven by the electric motor 11. An engine and a generator (neither are illustrated) for supplying electric power to the electric motor 11 are mounted in the vehicle body frame 2. The electric motor 11 is configured such that driving thereof is controlled by a controller 40 (see FIG. 3 to be described later) to be described later.

The bed 5 is a part that is loaded with the load W such as soil by a loading machine such as an excavator or a wheel loader. A rear end portion of the bed 5 is rotatably supported by the vehicle body frame 2 via a supporting shaft 2a provided to a rear end portion of the vehicle body frame 2. A hoist cylinder 13 that tilts the bed 5 is provided between the bed 5 and the vehicle body frame 2. The bed 5 is configured to be tiltable with respect to the vehicle body frame 2 by extension and contraction of the hoist cylinder 13 between a hauling position (illustrated by a solid line) as a position for hauling the load W and a dumping position (illustrated by a chain double-dashed line) as a position for dumping the load W. The dumping position of the bed 5 represents a state in which a front end portion of the bed 5 is raised and inclined, by an extension of the hoist cylinder 13, while a rear end portion of the bed 5 is rotated about the supporting shaft 2a of the vehicle body frame 2. At this dumping position, the load W on the bed 5 can be discharged from a rear end of the bed 5.

The cabin 6 is a part that the operator boards to operate the vehicle. Arranged in the cabin 6 are a cab seat (not illustrated) in which the operator is to be seated and various kinds of operating apparatuses (not illustrated) for the operator to operate the dump truck 1. For example, arranged are operating pedals such as an accelerator pedal and a brake pedal for travelling operations of making the dump truck 1 travel and stop, a steering wheel as a part of the steering mechanism for steering the front wheels 3, an operating unit for operating the bed 5 (none is illustrated), and the like.

Front suspensions 15 that mitigate an impact on the vehicle body frame 2 by absorbing vibration received from a road surface during travelling are provided between the front wheels 3 and the front portion of the vehicle body frame 2. Rear suspensions 16 that mitigate an impact on the vehicle body frame 2 by absorbing vibration received from the road surface during travelling are provided between the rear wheels 4 and the rear portion of the vehicle body frame 2. The front suspensions 15 and the rear suspensions 16 are, for example, constituted by hydraulic parts referred to as struts in place of mechanical spring mechanisms in order to support a very large load. The struts are spring damper mechanisms constituted by hydraulic cylinders.

Specifically, as illustrated in FIG. 2, for example, the struts as the front suspensions 15 and the rear suspensions 16 includes a tube 21 in a cylindrical shape, a piston 22 slidably disposed within the tube 21, and a rod 23 having one end side fixed to the piston 22 and having another end side projecting out of the tube 21. The piston 22 and the rod 23 move within the tube 21 along the central axis of the tube 21. A space within the tube 21 is divided into a bottom chamber 25 (main chamber) and a rod chamber 26 (sub-chamber) by the piston 22. The piston 22 and the rod 23 have an internal space 27 extending along the central axis of the tube 21. The internal space 27 is configured to communicate with the bottom chamber 25. Restriction holes 23a are drilled in the rod 23. The restriction holes 23a maintain the internal space 27 and the rod chamber 26, which are located at the rod 23, in a state of communicating with each other at all times. That is, the rod chamber 26 and the bottom chamber 25 are made to communicate with each other via the internal space 27 and the restriction holes 23a. The struts 15 and 16 have a hydraulic operating fluid filled within the tube 21. The struts 15 and 16 are configured to exert a spring effect by a compression action of the hydraulic operating fluid when an external force acts on the struts 15 and 16.

As illustrated in FIG. 1, a pressure sensor 31 that senses the pressure of the hydraulic operating fluid within the tube 21 is installed on the front suspensions 15 and the rear suspensions 16. In the front suspensions 15 and the rear suspensions 16 having the above-described configuration, the pressure of the hydraulic operating fluid within the tube 21 is a pressure proportional to a load supported by the strut (the front suspensions 15 and the rear suspensions 16). That is, the pressure sensors 31 function as a wheel load sensor that senses information on wheel loads as loads applied in a vertical direction to the front wheels 3 and the rear wheels 4.

The front wheels 3 have a wheel speed sensor 32 installed thereon to sense the rotational speed of the front wheels 3. The rear wheels 4 have a wheel speed sensor 33 installed thereon to sense the rotational speed of the rear wheels 4. The wheel speed sensors 32 and 33 are, for example, rotary encoders attached to an axle and a driving shaft of the electric motor 11. The wheel speed sensors 32 and 33 are configured to generate an electric pulse according to the rotational angles of the wheels. The thus configured wheel speed sensors 32 and 33 sense the rotational speeds of the front wheels 3 and the rear wheels 4 as time intervals (frequencies) of the electric pulses. The wheel speed sensors 32 and 33 output sensed information to the controller 40 to be described later.

The electric motor 11 is provided with a voltage sensor 34 and a current sensor 35 (see FIG. 3 to be described later for both) that sense a voltage V and a current I supplied from an electric power supply source (a generator or a battery) to the electric motor 11. The voltage sensor 34 and the current sensor 35 function as an electric power sensor that senses information on the electric power supplied from the electric power supply source to the electric motor 11. The voltage sensor 34 and the current sensor 35 output the sensed information to the controller 40 to be described later.

Here, work contents of an ordinary dump truck for use at a mine will be described.

At a mine site, an excavating machine such as a hydraulic excavator performs a work of stripping topsoil or excavating a mineral until a vein is reached. The dump truck for use at a mine repeatedly hauls a transport object such as the soil or the mineral excavated by the hydraulic excavating machine within the mine site. Specifically, the dump truck approaches the vicinity of the hydraulic excavating machine, and allows the excavated soil or mineral to be loaded by the hydraulic excavating machine. This place will be referred to as a loading place. The loaded transport object is hauled from the loading place to an appropriate place (transport destination) through a transport path. For example, when the transport object is the soil of the topsoil, the soil is hauled to a place where the soil is discarded for reclamation, and when the transport object is a mineral, the mineral is hauled to a stockpile or a pit for hauling the mineral by a conveyor. At either of the places, the dump truck performs unloading at the place by tilting the bed and discharging the transport object. This place will be referred to as a dumping place. The unloaded dump truck returns from the dumping place to the loading place to be loaded with the transport object. The dump truck repeats the above-described transportation work.

The weight of the transport object moved per unit time is generally used as an index indicating efficiency of the transportation work of the dump truck for use at a mine. This index of the work efficiency indicates that the loading of the dump truck with a larger amount of transport object at a time and the travelling of the dump truck at a faster speed improve the work efficiency. However, a load capacity of the dump truck is fixed for each vehicle, and a speed limit at which travelling can be performed safely is set for each mine site. From these, there is an upper limit to the efficiency of the transportation work. Further, when a case is assumed in which road surface conditions deteriorate as a result of, for example, the road surface becoming muddy at the time of bad weather or the like, the speed limit may be set lower than that at the time of fine weather at some mine sites. In addition, each operator may judge the road surface conditions and decelerate to a safe travelling speed. Therefore, a decrease in the work efficiency as compared with a case of fine weather is inevitable when the road surface conditions deteriorate. In order to suppress a decrease in the work efficiency while ensuring safety under such conditions, it is necessary to suppress a speed decrease as much as possible while decreasing the travelling speed to a range in which travelling can be performed safely.

Accordingly, the dump truck 1 according to the present embodiment is configured to be able to perform transportation work that can balance safety and work efficiency by controlling travelling by using an index that enables slipperiness of the road surface to be determined accurately. Specifically, the dump truck 1 includes the controller 40 (see FIG. 3 to be described later) that determines the slipperiness of the road surface and controls the driving of the electric motor 11.

Hardware and functions of the controller in the electrically driven hauling vehicle according to the first embodiment will next be described with reference to FIGS. 3 to 5. FIG. 3 is a block diagram illustrating a configuration of hardware and functional sections of the controller in the electrically driven hauling vehicle according to the first embodiment.

The controller 40 illustrated in FIG. 3 is configured to control the driving of the electric motor 11 according to a result of determination of the slipperiness of the road surface. The controller 40 includes, as a hardware configuration, for example, a storage device 41 constituted by a RAM, a ROM, and the like and a processing device 42 constituted by a CPU, an MPU, and the like. The storage device 41 stores, in advance, a program and various kinds of information necessary to determine the slipperiness of the road surface on which the dump truck 1 travels, and control the travelling. The processing device 42 implements various kinds of functions by reading the program and the various kinds of information from the storage device 41 as appropriate, and performing processing according to this program.

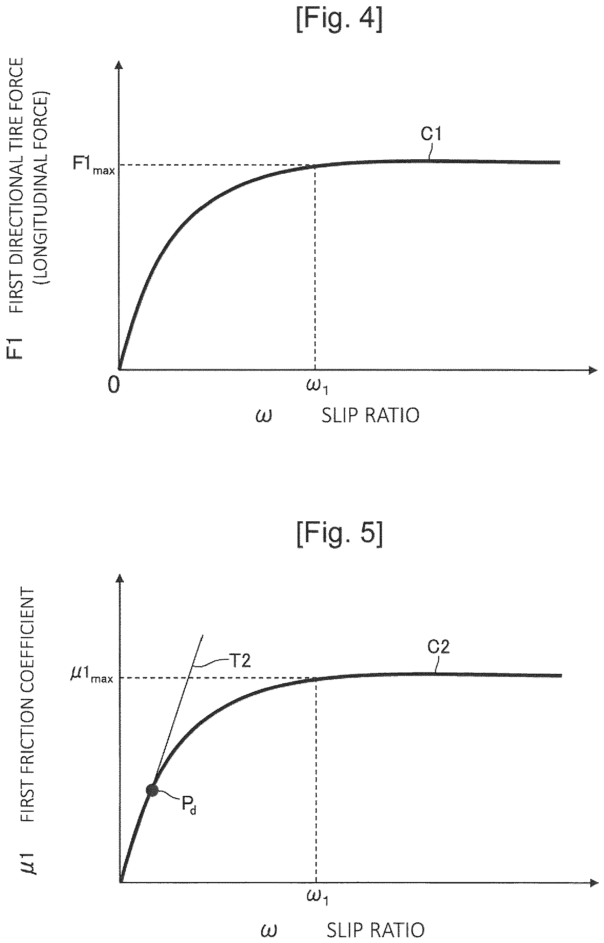

The controller 40 according to the present embodiment controls the travelling by using an index that enables the slipperiness of the road surface to be determined on the basis of characteristic diagrams illustrated in FIG. 4 and FIG. 5. FIG. 4 is a characteristic diagram illustrating typical tire characteristics. In FIG. 4, an axis of abscissas $\omega$ indicates a slip ratio, and an axis of ordinates F1 indicates a first directional tire force (tire longitudinal force).

A tire has a characteristic of generating a force through the occurrence of a minute slip. With regard to a longitudinal direction in which the tire is oriented (longitudinal direction of the tire in a rotational plane of the tire), a minute slip occurs between the tire and a ground due to a driving torque or a braking torque applied to the tire, and thereby a speed difference occurs between the rotational speed of the tire and a vehicle speed. The slip ratio $\omega$ as a ratio of this speed difference is expressed by the following Equation (1).

$$\omega = (v_w - v_b)/v_w \quad \ldots \quad \text{Equation (1)}$$

In Equation (1), $v_w$ denotes the rotational speed of the tire, and $v_b$ denotes the ground speed of the vehicle (which ground speed may hereinafter be referred to as a vehicle speed).

In a region in which the slip ratio $\omega$ expressed by Equation (1) is minute, a tire force F1 in the first direction as a frictional force in the longitudinal direction of the orientation of the tire which frictional force occurs from the tire to the ground (which tire force may hereinafter be referred to as a longitudinal force of the tire) is proportional to the slip ratio $\omega$ as illustrated in FIG. 4. A speed of increase in the first directional tire force F1 becomes slower when the slip ratio $\omega$ increases beyond the minute region, and the first directional tire force F1 is ultimately saturated to become a maximum value F1max, as indicated by a characteristic line C1. The maximum value F1max is a maximum frictional force in the first direction that can be generated by the tire on the road surface. It is known that a slip ratio $\omega$1 at which the first directional tire force F1 becomes a maximum value is generally a value of approximately 0.2.

Incidentally, the first directional tire force is a frictional force, and therefore the maximum value of the first directional tire force that can be generated is proportional to a load applied to the wheel (wheel load). The characteristic diagram of the first directional tire force (longitudinal force) illustrated in FIG. 4 illustrates characteristics in a case where the wheel load is constant. Unlike an ordinary automobile, the dump truck for use at a mine has a very large loading weight as compared with an own weight thereof, and generally carries a load that greatly exceeds the own weight. In addition, in the dump truck, because the bed is located in an upper portion of the vehicle, a gravity center position is located at a very high position, and there is a large amount of load shift of each wheel due to acceleration or deceleration or turning travelling.

In order to handle the road surface conditions in a uniform manner even in a case where the wheel load tends to change greatly as in the dump truck for use at a mine, the present embodiment has arrived at an idea of handling the first tire force (longitudinal force) as a friction coefficient by normalizing the longitudinal force by dividing the longitudinal force by the wheel load. A characteristic curve in this case is illustrated in FIG. 5. In FIG. 5, an axis of abscissas $\omega$ indicates the slip ratio, and an axis of ordinates $\mu$1 indicates a first friction coefficient, which is the friction coefficient with regard to the first directional tire force F1 (longitudinal force).

A characteristic line C2 illustrated in FIG. 5 indicates that as in the case of the first directional tire force F1 (longitudinal force) as described above, in a region in which the slip ratio $\omega$ is minute, the first friction coefficient $\mu$1 is proportional to the slip ratio $\omega$. When the slip ratio $\omega$ increases beyond the minute region, a speed of increase in the first friction coefficient $\mu$1 becomes slower as the slip ratio $\omega$ increases, and the first friction coefficient $\mu$1 is ultimately saturated to become a maximum value $\mu$1max. The maximum value $\mu$1max is a maximum friction coefficient of the road surface with regard to the first directional tire force F1 (longitudinal force), and the magnitude of the first maximum friction coefficient $\mu$1max represents the slipperiness of this road surface. That is, the first maximum friction coefficient $\mu$1max can be used as an index that enables the slipperiness of the road surface to be determined.

Here, the slope of a straight line T2 as a proportional gain of the first friction coefficient $\mu$1 and the slip ratio $\omega$ in a case where the slip ratio $\omega$ is in the minute range is assumed to be correlated with the maximum value $\mu$1max at the time of the saturation of the friction coefficient $\mu$1. That is, it is assumed that when the slope of the straight line T2 is relatively steep, the maximum value $\mu$1max is also relatively large, and that when the slope of the straight line T2 is relatively gentle, the maximum value $\mu$1max is also relatively small.

The present embodiment determines the slipperiness of the road surface by using the proportional gain (slope of the straight line T2) correlated with the first maximum friction coefficient $\mu$1max usable as an index of the slipperiness of the road surface. The proportional gain represents a ratio between the first friction coefficient with regard to the longitudinal force of the tire (the first directional tire force F1) and the slip ratio, and may therefore be referred to as a longitudinal force friction coefficient ratio. As will be described later in detail, the longitudinal force friction coefficient ratio can be computed by computing the slip ratio and the friction coefficient on the basis of information sensed by sensors during the travelling of the vehicle, determining the straight line T2 passing through a point Pd as a result of the computation and an origin O, and computing the longitudinal force friction coefficient ratio from the slope of the determined straight line T2. It can be estimated that when the longitudinal force friction coefficient ratio as a result of the computation is relatively large, the first maximum friction coefficient $\mu$1max of the road surface as an index of the slipperiness of the road surface is also relatively large. On the other hand, it can be estimated that when the longitudinal force friction coefficient ratio is relatively small, the first maximum friction coefficient $\mu$1max of the road surface is also relatively small. Accordingly, a configuration is adopted which determines the slipperiness of the road surface from the magnitude of the computed longitudinal force friction coefficient ratio.

The controller 40 according to the present embodiment controls the travelling after determining the slipperiness of the road surface. Specifically, as illustrated in FIG. 3, the controller 40 includes: a road surface state determination processing section 51 that performs a series of processing for determining the slipperiness of the road surface; and a motor control section 52 that controls the driving of the electric motor 11 on the basis of a determination result from the road surface state determination processing section 51. The determination processing necessitates three parameters, that is, the wheel load, the first directional tire force (longitudinal force of the tire), and the slip ratio. The road surface state determination processing section 51 includes, as subdivided functional sections, a wheel load computing section 54, a first directional tire force computing section 55, a slip ratio computing section 56, a first friction coefficient computing section 57, a longitudinal force friction coefficient ratio computing section 58, and a road surface state determining section 59.

The wheel load computing section 54 computes the wheel loads of the front wheels 3 and the rear wheels 4 on the basis of the sensed information (pressure values) of the pressure sensors 31 functioning as the wheel load sensor. The wheel load computing section 54 outputs the wheel loads as a result of the computation to the first friction coefficient computing section 57.

A support load of the dump truck 1 is generated by the compression of the hydraulic operating fluid filled in the struts 15 and 16 (see FIG. 2). Thus, the pressure of the hydraulic operating fluid within the tubes 21 of the struts 15 and 16 which pressure is sensed by the pressure sensors 31 is proportional to a load (wheel load) applied to each of the front wheels 3 and the rear wheels 4 via the struts 15 and 16. Accordingly, the wheel load computing section 54 computes the wheel load of each wheel by using the sensed information of the pressure sensor 31 and specification values of the strut 15 or 16 (the pressure receiving area of the piston 22, the inside diameter of the tube 21, and the like). For example, the wheel load W is expressed by the following Equation (2).

$$W = A \cdot P \quad \text{... Equation (2)}$$

In Equation (2), P denotes the pressure of the hydraulic operating fluid within the tube 21, and A denotes the pressure receiving area of the piston 22. Incidentally, the pressure receiving area A of the piston 22 is, for example, stored in the storage device 41 in advance.

The present embodiment senses the pressures of the struts 15 and 16 by the pressure sensors 31, and can thereby directly and accurately obtain the wheel loads of the dump truck 1, which wheel loads vary greatly, without estimating the wheel loads.

The first directional tire force computing section 55 computes the tire force in the first direction on the basis of the driving torque of the electric motor 11 obtained from the sensed information of the voltage sensor 34 and the sensed information of the current sensor 35, the sensors functioning as an electric power sensor that senses the electric power supplied from the electric power supply source to the electric motor 11. The tire force in the first direction is one of frictional forces in predetermined directions that occur against the driving wheels on the road surface. The first directional tire force computing section 55 constitutes a tire force computing section that computes the tire force as a frictional force. The first directional tire force computing section 55 outputs the first directional tire force as a result of the computation to the first friction coefficient computing section 57.

The slip ratio computing section 56 computes the slip ratio $\omega$ of each of the rear wheels 4 based on the sensed information of each of the wheel speed sensors 32 and 33 that sense the rotational speeds of the front wheels 3 and the rear wheels 4. The slip ratio $\omega$ is one of slip indexes indicating a degree of slipping occurring at the wheel. The slip ratio computing section 56 constitutes a slip index computing section that computes the slip index. The dump truck 1 according to the present embodiment has the rear wheels 4 driven by the electric motor 11, and is basically configured to be decelerated and stopped by regenerative torque of the electric motor 11. Hence, during normal travelling, neither of driving torque and braking torque is applied to the front wheels 3, and the front wheels 3 purely operate as driven wheels. Thus, the rotational speeds of the front wheels 3 can be used as the vehicle speed. Accordingly, the slip ratio computing section 56, for example, sets an average of the rotational speeds of the left and right front wheels 3 as a vehicle speed $v_b$, and computes the slip ratio $\omega$ of each of the rear wheels 4 by using the above-described Equation (1). The slip ratio computing section 56 outputs the slip ratio $\omega$ as a result of the computation to the longitudinal force friction coefficient ratio computing section 58.

Incidentally, before computing the slip ratio $\omega$ of each rear wheel 4, the slip ratio computing section 56 determines whether or not the vehicle speed $v_b$ is equal to or higher than a speed threshold value. This determination is made for a reason that the computation result of the slip ratio is unstable in a region in which the vehicle speed $v_b$ is very low. When the vehicle speed $v_b$ is lower than the speed threshold value, the controller 40 ends the processing of the road surface state determination processing section 51 without determining the slipperiness of the road surface. As described above, the rotational speeds of the front wheels 3 sensed by the wheel speed sensors 32 can be used as the vehicle speed $v_b$.

The first friction coefficient computing section 57 computes the first friction coefficient as the friction coefficient of the road surface with regard to the first directional tire force by dividing the first directional tire force as the computation result of the first directional tire force computing section 55 by the wheel loads as the computation result of the wheel load computing section 54. The computation of the first friction coefficient computing section 57 corresponds to the computation of the first friction coefficient $\mu$1 illustrated in FIG. 5. The first friction coefficient computing section 57 outputs the first friction coefficient as a result of the computation to the longitudinal force friction coefficient ratio computing section 58.

The longitudinal force friction coefficient ratio computing section 58 computes the longitudinal force friction coefficient ratio as the proportional gain described above by dividing the first friction coefficient as the computation result of the first friction coefficient computing section 57 by the slip ratio $\omega$ as the computation result of the slip ratio computing section 56. The computation of the longitudinal force friction coefficient ratio computing section 58 corresponds to the computation of the slope of the straight line T2 at the point Pd illustrated in FIG. 5. The point Pd is a point indicated by the slip ratio $\omega$ as the computation result of the slip ratio computing section 56 and the first friction coefficient $\mu$1 as the computation result of the first friction coefficient computing section 57. The longitudinal force friction coefficient ratio computing section 58 outputs the longitudinal force friction coefficient ratio as a result of the computation to the road surface state determining section 59.

Incidentally, after computing the slip ratio $\omega$, the slip ratio computing section 56 determines whether or not the slip ratio $\omega$ is within a predetermined range. As described above, the condition that the longitudinal force friction coefficient ratio is correlated with the maximum friction coefficient of the road surface holds only in the case of a region of small slip ratios in which the longitudinal force friction coefficient ratio can be considered to be linear. In a region of large slip ratios, the longitudinal force friction coefficient ratio cannot be considered to be linear, and the correlation between the longitudinal force friction coefficient ratio and the maximum friction coefficient of the road surface is not maintained. It is difficult to make an accurate determination of the slipperiness of the road surface when such a longitudinal force friction coefficient ratio is used. In addition, the computation result of the friction coefficient ratio is unstable in a region in which the slip ratio is very small. It is therefore difficult to make an accurate determination of the slipperiness of the road surface also when the slip ratio is in an infinitesimal range in the vicinity of zero. For these reasons, when the slip ratio $\omega$ deviates from the predetermined range, the controller 40 ends the processing of the road surface state determination processing section 51 without determining the slipperiness of the road surface.

The road surface state determining section 59 determines the slipperiness of the road surface on the basis of the magnitude of the longitudinal force friction coefficient ratio as the computation result of the longitudinal force friction coefficient ratio computing section 58. For example, the longitudinal force friction coefficient ratio is compared with a determination threshold value. When the longitudinal force friction coefficient ratio is less than the determination threshold value, the first maximum friction coefficient of the road surface as the index indicating the slipperiness of the road surface is estimated to be low, and therefore a flag indicating that the road surface is in a slippery state is output. When the longitudinal force friction coefficient ratio is equal to or more than the determination threshold value, on the other hand, the maximum friction coefficient of the road surface is estimated to be high, and therefore a flag indicating that the road surface is not in a slippery state is output. In addition, a configuration is possible in which a plurality of such determination threshold values are set, the slipperiness of the road surface is divided into a plurality of levels so as to correspond to the set plurality of determination threshold values (for example, levels 1 to 3 for two determination threshold values of different magnitudes), and a level of the slipperiness of the road surface is determined according to the magnitude of the longitudinal force friction coefficient ratio with respect to the plurality of determination threshold values. In addition, a configuration is also possible in which a map indicating relation between the longitudinal force friction coefficient ratio and the first maximum friction coefficient of the road surface is stored in the storage device 41 in advance, and the road surface state determining section 59 estimates the first maximum friction coefficient of the road surface from the longitudinal force friction coefficient ratio as the computation result of the longitudinal force friction coefficient ratio computing section 58 by referring to the map stored in the storage device 41, determines the slipperiness of the road surface by comparing the first maximum friction coefficient as a result of the estimation with a determination threshold value, and outputs a flag.

The motor control section 52 controls the driving of the electric motor 11 on the basis of a result of the determination of the slipperiness of the road surface by the road surface state determining section 59. For example, when a flag indicating that the road surface is in a slippery state is output as the determination result of the road surface state determining section 59, the electric motor 11 is controlled so as to decelerate the rear wheels 4. In addition, a configuration is possible in which when the level of the slipperiness of the road surface is output as the determination result of the road surface state determining section 59, the electric motor 11 is controlled so as to decelerate the rear wheels 4 if this level is a level indicating a slippery state of the road surface.

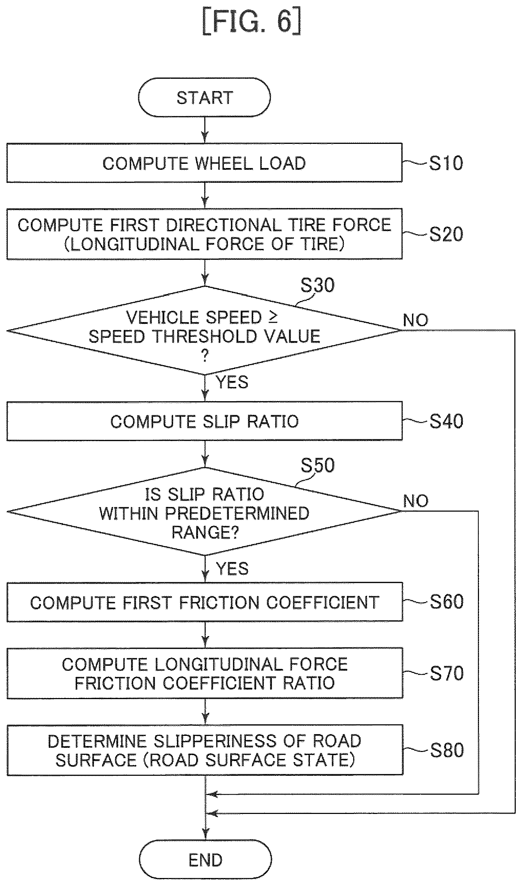

Next, referring to FIG. 6, a description will be made of a processing procedure of road surface state determination processing of the controller in the electrically driven hauling vehicle according to the first embodiment. FIG. 6 is a flowchart illustrating an example of the processing procedure of the road surface state determination processing in the controller of the electrically driven hauling vehicle according to the first embodiment illustrated in FIG. 3.

In FIG. 6, the controller 40 illustrated in FIG. 3 computes the wheel load of each of the wheels 3 and 4 on the basis of the pressure of the hydraulic operating fluid in the suspensions 15 and 16 as the sensed information of the pressure sensors 31 (step S10), and computes the first directional tire force (longitudinal force of the tire) on the basis of the sensed information of the voltage sensor 34 and the current sensor 35 (step S20). Incidentally, the order of the processing of step S10 and step S20 is optional.

Next, the controller 40 determines whether or not the vehicle speed of the dump truck 1 is equal to or higher than the speed threshold value (step S30). The vehicle speed is, for example, computed on the basis of the rotational speeds of the front wheels 3 sensed by the wheel speed sensors 32. When the vehicle speed is lower than the speed threshold value (NO), the road surface state determination processing is ended (end). When the vehicle speed is equal to or higher than the speed threshold value (YES), on the other hand, the slip ratio is computed on the basis of the all pieces of sensed information of the wheel speed sensors 32 and 33 (step S40).

Next, the controller 40 determines whether or not the slip ratio as a result of the computation in step S40 is within the predetermined range (step S50). When the slip ratio is outside the predetermined range (NO), it is difficult to determine the slipperiness of the road surface, and thus the road surface state determination processing is ended (end). When the slip ratio is within the predetermined range (YES), on the other hand, the first friction coefficient is computed by dividing the first directional tire force (longitudinal force of the tire) as a result of the computation in step S20 by the wheel load as a result of the computation in step S10 (step S60).

Next, the controller 40 computes the longitudinal force friction coefficient ratio by dividing the first friction coefficient as a result of the computation in step S60 by the slip ratio as the computation result in step S40 (step S70), and determines the slipperiness of the road surface (road surface state) on the basis of the longitudinal force friction coefficient ratio as a result of the computation in step S70 (step S80). When a result of the determination is a flag or a level indicating that the road surface is in a slippery state, the controller 40 controls the rotational speed or torque of the electric motor 11 so as to decelerate the rear wheels 4. When the processing of step S80 is ended, a return is made to the start to repeat the flow of steps 10 to S80 described above.

Thus, the present embodiment performs the road surface state determination processing by using, as an index of the slipperiness of the road surface, the longitudinal force friction coefficient ratio, which is the slope T2 that can be computed on the basis of the relation between the slip ratio $\omega$ in the minute region and the first friction coefficient $\mu 1$ in the characteristic line C2 illustrated in FIG. 5, or the first maximum friction coefficient $\mu 1 \max$, which can be estimated from the slope T2. An increase in the slipping of the tires can be prevented in advance by controlling the electric motor 11 so as to decelerate the rear wheels 4 when the first maximum friction coefficient $\mu 1 \max$ or the longitudinal force friction coefficient ratio usable as an index of the slipperiness of the road surface is smaller than a determination threshold value. In addition, a decrease in the work efficiency can be prevented by maintaining the driving of the electric motor 11 without decelerating the rear wheels 4 when the first maximum friction coefficient $\mu 1 \max$ or the longitudinal force friction coefficient ratio is equal to or larger than the determination threshold value. That is, it is possible to prevent a decrease in the work efficiency while ensuring safety.

[Second Embodiment]

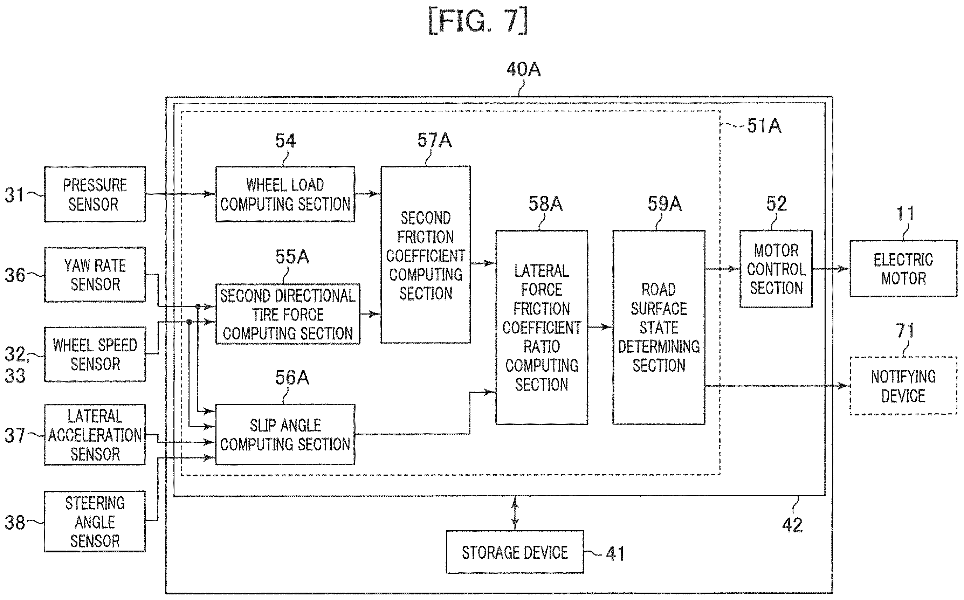

An electrically driven hauling vehicle according to a second embodiment of the present invention will next be described with reference to FIGS. 7 to 11. Incidentally, in FIGS. 7 to 11, the same reference numerals as the reference numerals illustrated in FIGS. 1 to 6 represent similar parts, and therefore detailed description thereof will be omitted. FIG. 7 is a block diagram illustrating a configuration of functional sections of a controller in the electrically driven hauling vehicle according to the second embodiment of the present invention.

Differences of the electrically driven hauling vehicle according to the second embodiment from the first embodiment are summarized as follows. The controller 40 according to the first embodiment is configured to determine the slipperiness of the road surface by using the index (longitudinal force friction coefficient ratio) computed on the basis of the tire characteristics with regard to the tire force occurring in the first direction (longitudinal force) (which tire characteristics may hereinafter be referred to as longitudinal tire characteristics). On the other hand, a controller 40A according to the second embodiment is configured to compute an index of the slipperiness of the road surface on the basis of tire characteristics (which may hereinafter be referred to as lateral tire characteristics) with regard to a second directional tire force (lateral force) as a frictional force occurring against the tire in a direction (which may hereinafter be referred to as a second direction) orthogonal to the longitudinal direction (first direction) of the tire during turning travelling, and determine the slipperiness of the road surface by using a result of the computation.

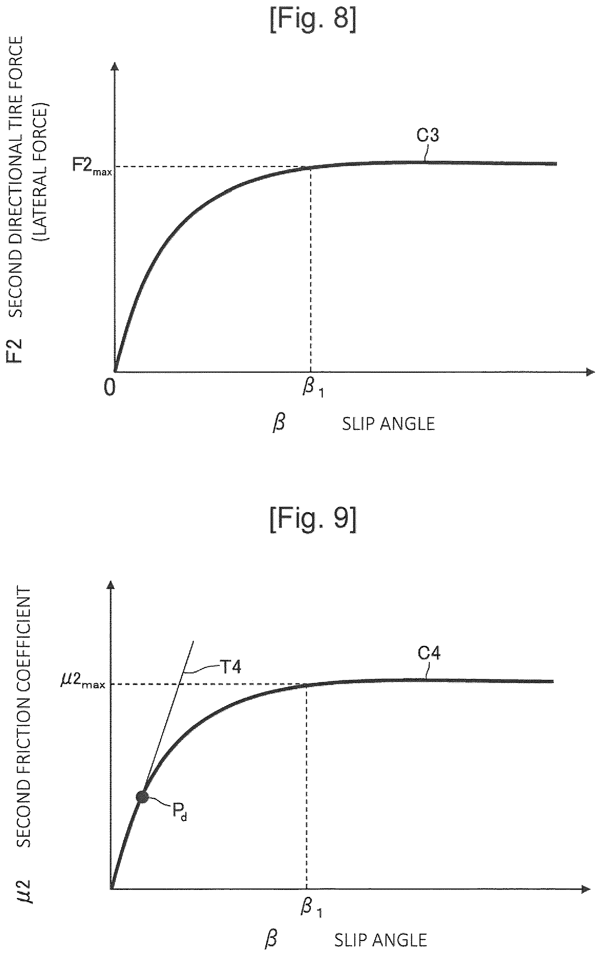

Specifically, the controller 40A according to the second embodiment illustrated in FIG. 7 includes: a road surface state determination processing section 51A that performs a series of processing for determining the slipperiness of the road surface on the basis of the lateral tire characteristics; and a motor control section 52 that has a configuration similar to that in the first embodiment, and controls the electric motor 11 according to a result of the determination of the road surface state determination processing section 51A. The road surface state determination processing section 51A determines the slipperiness of the road surface on the basis of the lateral tire characteristics illustrated in FIG. 8 and FIG. 9 in place of the longitudinal tire characteristics illustrated in FIG. 4 and FIG. 5. FIG. 8 is a graph illustrating typical relation between the second directional tire force (tire lateral force) and a slip angle. FIG. 9 is a graph illustrating relation between a second friction coefficient (friction coefficient with regard to the second directional tire force) of the road surface obtained from the graph illustrated in FIG. 8 and the slip angle.

A tire force (lateral force) as a frictional force occurs also in the second direction orthogonal to the longitudinal direction of the tire in a state in which a deviation occurs between the longitudinal direction in which the tire is oriented (longitudinal direction within the rotational plane) and the traveling direction of the vehicle when the tire rolls. A deviation angle between the longitudinal direction of the tire and the traveling direction of the vehicle at this time is referred to as a slip angle. The lateral tire characteristics represent relation between the tire force in the second direction (lateral force) and the slip angle, and are characteristics similar to the longitudinal tire characteristics illustrated in FIG. 4.

Specifically, the lateral tire characteristics indicate that as illustrated in FIG. 8, when the slip angle $\beta$ is in a minute region, the second directional tire force F2 (lateral force) is proportional to the slip angle $\beta$. As indicated by a characteristic line C3, a speed of increase in the second directional tire force F2 (lateral force) becomes slower when the slip angle $\beta$ increases beyond the minute region, and the second directional tire force F2 (lateral force) is ultimately saturated, and becomes a maximum value F2max. The maximum value F2max is a maximum tire force F2 in the second direction (lateral force) that can be generated by the tire on the road surface. It is known that a slip angle $\beta1$ at which the second directional tire force F2 (lateral force) becomes a maximum value is generally approximately 10°. The second directional tire force F2 (lateral force) is also a frictional force as with the first directional tire force (longitudinal force) in the longitudinal tire characteristics described above, and therefore has a characteristic of being proportional to the wheel load. Hence, in order to handle the road surface conditions in a uniform manner also in a situation in which the wheel load tends to change greatly as in the dump truck for use at a mine, as with the longitudinal tire characteristics illustrated in FIG. 4, the lateral tire characteristics are also handled as a friction coefficient by normalizing the lateral tire characteristics by dividing the second directional tire force F2 (lateral force) by the wheel load. A characteristic curve in this case is illustrated in FIG. 9. In FIG. 9, an axis of abscissas $\beta$ indicates the slip angle, and an axis of ordinates $\mu2$ indicates a second friction coefficient, which is a friction coefficient with regard to the second directional tire force

F2 (tire lateral force).

A characteristic line C4 illustrated in FIG. 9 indicates that, as in the case of the second directional tire force (lateral force) described above, when the slip angle $\beta$ is in a minute region, the second friction coefficient $\mu2$ is proportional to the slip angle $\beta$. A speed of increase in the second friction coefficient $\mu2$ becomes slower when the slip angle $\beta$ increases beyond the minute region, and the second friction coefficient $\mu2$ is ultimately saturated, and becomes a maximum value $\mu2max$. The maximum value $\mu2max$ is a maximum friction coefficient of the road surface with regard to the second directional tire force (lateral force), and the magnitude of the second maximum friction coefficient $\mu2max$ represents the slipperiness of this road surface. That is, the second maximum friction coefficient $\mu2max$ can be used as an index of the slipperiness of the road surface.

Here, the slope of a straight line T4 as a proportional gain of the second friction coefficient $\mu2$ and the slip angle $\beta$ in a case where the slip angle $\beta$ is in the minute range is assumed to be correlated with the maximum value $\mu2max$ at the time of the saturation of the friction coefficient $\mu2$. That is, it is assumed that when the slope of the straight line T4 is relatively steep, the maximum value $\mu2max$ is also relatively large, and that when the slope of the straight line T4 is relatively gentle, the maximum value $\mu2max$ is also relatively small.

The present embodiment determines the slipperiness of the road surface by using the proportional gain (slope of the straight line T4) correlated with the second maximum friction coefficient $\mu2max$ usable as an index of the slipperiness of the road surface. The proportional gain represents a ratio between the second friction coefficient with regard to the lateral force of the tire (second directional tire force F2) and the slip angle, and may therefore be referred to as a lateral force friction coefficient ratio. As will be described later in detail, the lateral force friction coefficient ratio can be computed from the slope of the determined straight line T4 by computing the slip angle and the friction coefficient on the basis of information sensed by sensors during travelling, and determining the straight line T4 passing through a point Pd as a result of the computation and an origin O. It can be estimated that when the lateral force friction coefficient ratio as a result of the computation is relatively large, the second maximum friction coefficient $\mu2max$ of the road surface as an index of the slipperiness of the road surface is also relatively large. On the other hand, it can be estimated that when the lateral force friction coefficient ratio is relatively small, the second maximum friction coefficient $\mu2max$ of the road surface is also relatively small. Accordingly, a configuration is adopted which determines the slipperiness of the road surface on the basis of the computed lateral force friction coefficient ratio.

The road surface state determination processing section 51A of the controller 40A according to the present embodiment determines the slipperiness of the road surface on the basis of the lateral force friction coefficient ratio described above. In this case, the determination processing of the road surface state determination processing section 51A necessitates three parameters, that is, the wheel load, the second directional tire force (lateral force), and the slip angle.

Accordingly, as illustrated in FIG. 7, the controller 40A is not only electrically connected to the pressure sensors 31 and the wheel speed sensors 32 and 33 as in the first embodiment but also electrically connected to a yaw rate sensor 36, a lateral acceleration sensor 37, and a steering angle sensor 38. The yaw rate sensor 36 senses a yaw angular velocity about a center of gravity of the dump truck 1 (speed of a change in a rotational angle in a turning direction which change occurs during turning travelling), and is, for example, installed in the vicinity of the center of gravity of the vehicle. The lateral acceleration sensor 37 senses a lateral acceleration as an acceleration occurring in a direction orthogonal to the forward-rearward direction of the dump truck 1, and is, for example, installed in the vicinity of the center of gravity of the vehicle. The steering angle sensor 38 senses the steering angle of the steering mechanism (not illustrated) for steering the front wheels 3 as the driven wheels, and is provided to the steering mechanism. Each of the yaw rate sensor 36, the lateral acceleration sensor 37, and the steering angle sensor 38 outputs sensed information to the controller 40A.

As illustrated in FIG. 7, the road surface state determination processing section 51A includes, as subdivided functional sections, a wheel load computing section 54 as in the first embodiment, a second directional tire force computing section 55A as a substitute for the first directional tire force computing section 55 in the first embodiment, a slip angle computing section 56A as a substitute for the slip ratio computing section 56 in the first embodiment, a second friction coefficient computing section 57A as a substitute for the first friction coefficient computing section 57 in the first embodiment, a lateral force friction coefficient ratio computing section 58A as a substitute for the longitudinal force friction coefficient ratio computing section 58 in the first embodiment, and a road surface state determining section 59A as a substitute for the road surface state determining section 59 in the first embodiment. A description of the wheel load computing section 54 having a configuration similar to that in the first embodiment will be omitted.

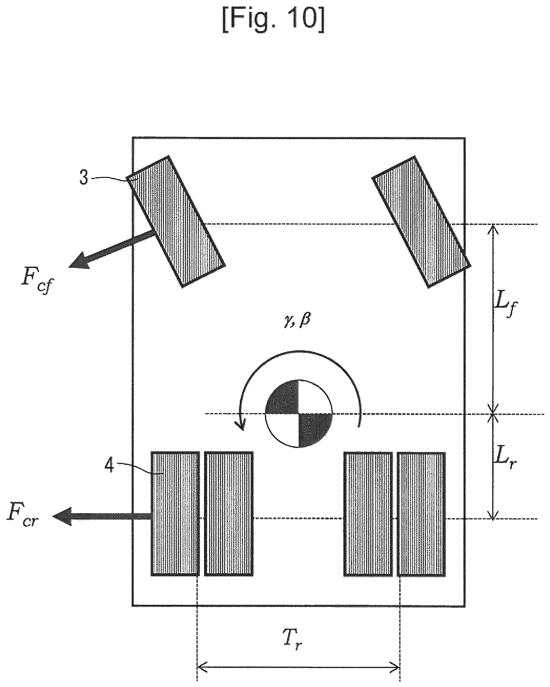

The second directional tire force computing section 55A computes the tire force in the second direction (lateral force) by using the sensed information of the wheel speed sensors 32 of the front wheels 3 and the yaw rate sensor 36. FIG. 10 schematically illustrates forces (frictional forces) occurring at the wheels (tires) in the dump truck 1 and the moment of the dump truck 1 during turning travelling. The second directional tire force $F_2$ (lateral force) is computed on the basis of a fact that a centrifugal force occurring in the dump truck 1 during the turning travelling and a centripetal force opposing the centrifugal force are balanced with each other. An equation of a balance between the centripetal force and the centrifugal force during the turning travelling is expressed by the following Equation (3).

$$mv_b\gamma = 2F_{cf} + 2F_{cr} \ldots \text{Equation (3)}$$

In Equation (3), m denotes a vehicle weight, $v_b$ denotes a vehicle speed, and $\gamma$ denotes a yaw rate. $F_{cf}$ and $F_{cr}$ respectively denote cornering forces of the front wheels 3 and the rear wheels 4 (components in a centripetal direction in the lateral force).

The vehicle weight m changes according to the presence or absence of the load of the transport object. The vehicle speed $v_b$ is obtained from the sensed information of the wheel speed sensors 32, as described earlier. The yaw rate $\gamma$ is obtained from the sensed information of the yaw rate sensor 36. The cornering forces $F_{cf}$ and $F_{cr}$ of the front wheels 3 and the rear wheels 4 can be regarded as the lateral force in a range of small slip angles (region in which the above-described lateral force is linear).

In addition, an equation of yawing motion is expressed by the following Equation (4).

$$I \cdot d\gamma/dt = 2L_f F_{cf} + 2L_r F_{cr} \ldots \text{Equation (4)}$$

In Equation (4), $L_f$ and $L_r$ respectively denote a distance from the center of gravity of the vehicle illustrated in FIG. 10 to the axle of the front wheels 3 and a distance from the center of gravity of the vehicle to the axle of the rear wheels 4. $L_f$ and $L_r$ are stored in the storage device 41 in advance. I denotes the moment of inertia of the vehicle, and is, for example, stored in the storage device 41 in advance. $d\gamma/dt$ denotes temporal differentiation of the yaw rate $\gamma$, and can be obtained by being approximated by a difference in the sensed information of the yaw rate sensor 36.

The second directional tire force computing section 55A computes the cornering force $F_{cf}$ of the front wheels 3 and the cornering force $F_{cr}$ of the rear wheels 4 which forces can be regarded as the lateral force, by substituting the vehicle speed obtained from the sensed information of the wheel speed sensors 32 and the difference between the yaw rate obtained from the sensed information of the yaw rate sensor 36 and the yaw rate $\gamma$ into Equation (3) and Equation (4) described above, and solving the simultaneous equations. The tire force in the second direction (lateral force) is one of frictional forces in the predetermined directions that occur at the wheels on the road surface. The second directional tire force computing section 55A constitutes a tire force computing section that computes the tire force as a frictional force. The second directional tire force computing section 55A outputs the lateral forces $F_{cf}$ and $F_{cr}$ of the front wheels 3 and the rear wheels 4 (second directional tire force $F_2$) as a result of the computation to the second friction coefficient computing section 57A.

The slip angle computing section 56A computes the slip angle $\beta$ by using the sensed information of the wheel speed sensors 32 and 33, the sensed information of the yaw rate sensor 36, the sensed information of the lateral acceleration sensor 37, and the sensed information of the steering angle sensor 38. The slip angle $\beta$ is one of slip indexes indicating a degree of slipping that occurs at the wheel. The slip angle computing section 56A constitutes a slip index computing section that computes the slip index. The slip angle computing section 56A, for example, computes the slip angle $\beta$ by estimating turning motion parameters on the basis of the sensed information of the wheel speed sensors 32 and 33, the sensed information of the yaw rate sensor 36, the sensed information of the lateral acceleration sensor 37, and the sensed information of the steering angle sensor 38, and solving motion equations at the time of the turning travelling, which equations are constituted by Equation (3) and Equation (4) described above, by a Kalman filter. The slip angle computing section 56A outputs the slip angle $\beta$ as a result of the computation to the lateral force friction coefficient ratio computing section 58A.

Incidentally, before computing the slip angle, the slip angle computing section 56A determines whether or not a lateral acceleration As sensed by the lateral acceleration sensor 37 is equal to or more than an acceleration threshold value. This determination is made because the computation results of the slip angle and the lateral force (second directional tire force F2) are unstable in a region in which the lateral acceleration As is very small. When the lateral acceleration As is smaller than the acceleration threshold value, the controller 40A ends the processing of the road surface state determination processing section 51A without determining the slipperiness of the road surface.

The second friction coefficient computing section 57A computes the second friction coefficient of the road surface by dividing the second directional tire force (lateral force) as the computation result of the second directional tire force computing section 55A by the wheel loads as the computation result of the wheel load computing section 54. The computation of the second friction coefficient computing section 57A corresponds to the computation of the friction coefficient $\mu2$ illustrated in FIG. 9. The second friction coefficient computing section 57A outputs the second friction coefficient as a result of the computation to the lateral force friction coefficient ratio computing section 58A.

The lateral force friction coefficient ratio computing section 58A computes the lateral force friction coefficient ratio as the above-described proportional gain by dividing the second friction coefficient $\mu2$ as the computation result of the second friction coefficient computing section 57A by the slip angle $\beta$ as the computation result of the slip angle computing section 56A. The computation of the lateral force friction coefficient ratio computing section 58A corresponds to the computation of the slope of the straight line T4 at the point Pd illustrated in FIG. 9. The point Pd is a point indicated by the slip angle $\beta$ as the computation result of the slip angle computing section 56A and the second friction coefficient $\mu2$ as the computation result of the second friction coefficient computing section 57A. The lateral force friction coefficient ratio computing section 58A outputs the lateral force friction coefficient ratio as a result of the computation to the road surface state determining section 59A.

Incidentally, the slip angle computing section 56A determines whether or not the slip angle $\beta$ as the computation result is within a predetermined range. As described above, the condition that the lateral force friction coefficient ratio is correlated with the maximum friction coefficient of the road surface holds in the case of a region of small slip angles in which the lateral force friction coefficient ratio can be considered to be linear. In a region of large slip angles, the lateral force friction coefficient ratio cannot be considered to be linear, and the correlation between the lateral force friction coefficient ratio and the maximum friction coefficient of the road surface is not maintained. It is difficult to make an accurate determination of the slipperiness of the road surface even when such a lateral force friction coefficient ratio is used. As described above, the slip angle $\beta1$ at which the second directional tire force F2 (lateral force) becomes a maximum value is generally approximately 10°. Thus, an upper limit of the predetermined range is preferably smaller than 10°. In addition, the computation result of the lateral force friction coefficient ratio is unstable in a region in which the slip angle is very small. It is therefore difficult to make an accurate determination of the slipperiness of the road surface also when the slip angle is in an infinitesimal range in the vicinity of zero. For these reasons, when the slip angle $\beta$ deviates from the predetermined range, the controller 40A ends the processing of the road surface state determination processing section 51A without determining the slipperiness of the road surface.

The road surface state determining section 59A determines the slipperiness of the road surface on the basis of the magnitude of the lateral force friction coefficient ratio as the computation result of the lateral force friction coefficient ratio computing section 58A. The determining method by the road surface state determining section 59A is similar to the determining method by the road surface state determining section 59 in the first embodiment except that the lateral force friction coefficient ratio as the computation result of the lateral force friction coefficient ratio computing section 58A is used as a determination index.

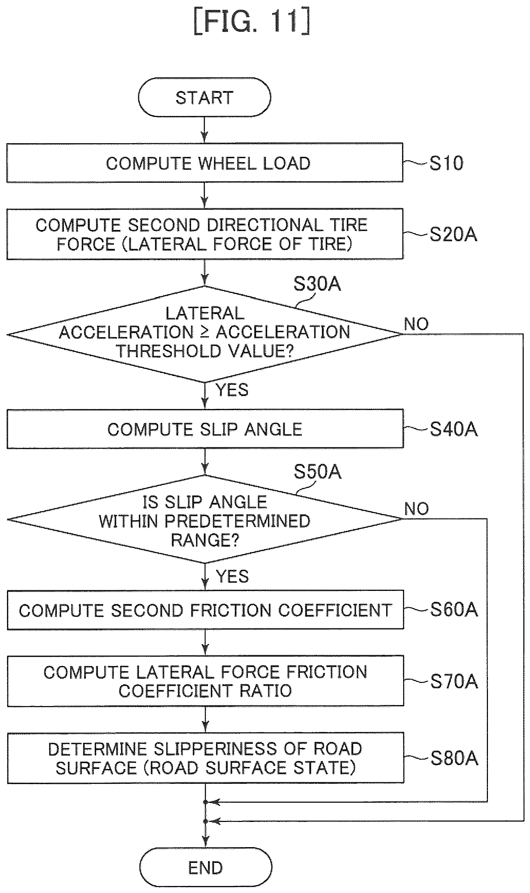

Next, referring to FIG. 11, a description will be made of a processing procedure of road surface state determination processing of the controller in the electrically driven hauling vehicle according to the second embodiment. FIG. 11 is a flowchart illustrating an example of the processing procedure of the road surface state determination processing in the controller of the electrically driven hauling vehicle according to the second embodiment illustrated in FIG. 7.

In FIG. 11, as with the controller 40 in the first embodiment, the controller 40A illustrated in FIG. 7 computes the wheel load of each of the wheels 3 and 4 on the basis of the sensed information of the pressure sensors 31 (step S10). Next, the second directional tire force (lateral force) is computed by using the simultaneous equations of Equation (3) and Equation (4) described above on the basis of the sensed information of the wheel speed sensors 32 of the front wheels 3 and the yaw rate sensor 36 (step S20A). Incidentally, the order of the processing of step S10 and step S20A is optional.

Next, the controller 40A determines whether or not the lateral acceleration of the dump truck 1 sensed by the lateral acceleration sensor 37 is equal to or more than the acceleration threshold value (step S30A). When the lateral acceleration is less than the acceleration threshold value (NO), the computation result of the slip angle is unstable, and therefore the road surface state determination processing is ended (end). When the lateral acceleration is equal to or more than the acceleration threshold value (YES), on the other hand, the slip angle $\beta$ is computed by using the sensed information of the wheel speed sensors 32 and 33, the sensed information of the yaw rate sensor 36, the sensed information of the lateral acceleration sensor 37, and the sensed information of the steering angle sensor 38 (step S40A).

Next, the controller 40A determines whether or not the slip angle as a result of the computation in step S40A is within the predetermined range (step S50A). When the slip angle is outside the predetermined range (NO), it is difficult to determine the slipperiness of the road surface, and therefore the road surface state determination processing is ended (end). When the slip angle is within the predetermined range (YES), on the other hand, the second friction coefficient is computed by dividing the lateral force of the tire as a result of the computation in step S20A by the wheel load as a result of the computation in step S10 (step S60A).

Next, the controller 40A computes the lateral force friction coefficient ratio by dividing the second friction coefficient as a result of the computation in step S60A by the slip angle as the result computation in step S40A (step S70A), and determines the slipperiness of the road surface (road surface state) on the basis of the lateral force friction coefficient ratio as a result of the computation in step S70 (step S80A). When a result of the determination is a flag or a level indicating that the road surface is in a slippery state, the controller 40A controls the rotational speed or torque of the electric motor 11 so as to decelerate the rear wheels 4. When the processing of step S80 is ended, a return is made to the start to repeat the flow of steps 10 to S80A described above.

Thus, the present embodiment performs the road surface state determination processing by using, as an index of the slipperiness of the road surface, the lateral force friction coefficient ratio, which is the slope T4 that can be computed on the basis of the relation between the slip angle $\beta$ in the minute region and the second friction coefficient $\mu 2$ in the characteristic line C4 illustrated in FIG. 9, or the second maximum friction coefficient $\mu 2max$, which can be estimated from the slope T4. An increase in the slipping of the tires can be prevented in advance by controlling the electric motor 11 so as to decelerate the rear wheels 4 when the second maximum friction coefficient $\mu 2max$ or the lateral force friction coefficient ratio usable as an index of the slipperiness of the road surface is smaller than a determination threshold value. In addition, a decrease in the work efficiency can be prevented by maintaining the driving of the electric motor 11 without decelerating the rear wheels 4 when the second maximum friction coefficient $\mu 2max$ or the lateral force friction coefficient ratio is equal to or larger than the determination threshold value. That is, it is possible to prevent a decrease in the work efficiency while ensuring safety. Further, by using the lateral force friction coefficient ratio rather than the longitudinal force friction coefficient ratio, it is possible to determine the road surface state according to turning motion following a travelling path even in a travelling section in which gentle acceleration or deceleration is performed while a substantially constant speed is maintained.

Summarizing the first embodiment and the second embodiment described above, the dump truck 1 (electrically driven hauling vehicle) includes: the plurality of rear wheels 4 (driving wheels) and the plurality of front wheels 3 (driven wheels); the wheel speed sensors 32 and 33 that sense each of the rotational speeds of the plurality of rear wheels 4 (driving wheels) and the plurality of front wheels 3 (driven wheels); the electric motor 11 that drives the plurality of rear wheels 4 (driving wheels); the controller 40 or 40A that controls the electric motor 11; and the pressure sensors 31 (wheel load sensor) that sense each of pieces of information about the wheel loads as loads applied in the vertical direction to the plurality of rear wheels 4 (driving wheels) and the plurality of front wheels 3 (driven wheels). The controller 40 or 40A is configured to have functional sections including the wheel load computing section 54 that computes the wheel load on the basis of the sensed information of the pressure sensors 31 (wheel load sensor), the tire force computing section 55 or 55A that computes the first directional tire force or the second directional tire force (tire force) as a frictional force that occurs against at least one of the plurality of rear wheels 4 (driving wheels) and the plurality of front wheels 3 (driven wheels) on the road surface, the slip index computing section 56 or 56A that computes the slip ratio or the slip angle (slip index) indicating a degree of slipping that occurs at at least one of the plurality of rear wheels 4 (driving wheels) and the plurality of front wheels 3 (driven wheels), the friction coefficient computing section 57 or 57A that computes the first or second friction coefficient by dividing the first directional tire force or the second directional tire force (tire force) as a result of the computation of the tire force computing section 55 by the wheel load as a result of the computation of the wheel load computing section 54, and the friction coefficient ratio computing section 58 or 58A that computes the longitudinal force friction coefficient ratio or the lateral force friction coefficient ratio (friction coefficient ratio) by dividing the first or second friction coefficient as a result of the computation of the friction coefficient computing section 57 by the slip ratio or the slip angle (slip index) as a result of the computation of the slip index computing section 56. The controller 40 or 40A is configured to control the driving of the electric motor 11 on the basis of the longitudinal force friction coefficient ratio or the lateral force friction coefficient ratio (friction coefficient ratio) as a result of the computation of the friction coefficient ratio computing section 58 or 58A.

According to this configuration, the longitudinal force friction coefficient ratio or the lateral force friction coefficient ratio (friction coefficient ratio), which is correlated with the maximum friction coefficient $\mu 1max$ of the road surface as an index that enables the slipperiness of the road surface to be determined, is computed by dividing the first or second friction coefficient computed by using an accurate wheel load obtained on the basis of the sensed information of the wheel load sensors 31 by the slip ratio or the slip angle (slip index), and the driving of the electric motor 11 is controlled on the basis of the longitudinal force friction coefficient ratio or the lateral force friction coefficient ratio (friction coefficient ratio) as a result of the computation. It is therefore possible to control travelling while using an index that enables the slipperiness of the road surface to be determined accurately without measuring a steering force under conditions where the wheel load varies.

In addition, in the foregoing first embodiment, the tire force computing section is the first directional tire force computing section 55 that computes each of first directional tire forces as the tire force. The first directional tire forces are frictional forces that occur against the plurality of rear wheels 4 (driving wheels) in the longitudinal direction of the orientation of the plurality of rear wheels 4 (driving wheels). The slip index computing section is the slip ratio computing section 56 that computes each of the slip ratios of the plurality of rear wheels 4 (driving wheels) as the slip index. The slip ratios are computed on the basis of the rotational speeds of the plurality of rear wheels 4 (driving wheels) and the rotational speeds of the plurality of front wheels 3 (driven wheels) sensed by the wheel speed sensors 32 and 33. The friction coefficient computing section is the first friction coefficient computing section 57 that computes first friction coefficients as the friction coefficient. The first friction coefficients are obtained by dividing the first directional tire forces as a result of the computation of the first directional tire force computing section 55 (tire force computing section) by the wheel loads as the computation result of the wheel load computing section 54. The friction coefficient ratio computing section is the longitudinal force friction coefficient ratio computing section 58 that computes longitudinal force friction coefficient ratios (first friction coefficient ratios) as the friction coefficient ratio. The longitudinal force friction coefficient ratios (first friction coefficient ratios) are obtained by dividing the first friction coefficients as a result of the computation of the first friction coefficient computing section 57 (friction coefficient computing section) by the slip ratios as a result of the computation of the slip index computing section 56. The controller 40 is configured to control the driving of the electric motor 11 based on the longitudinal force friction coefficient ratios (first friction coefficient ratios) as a result of the computation of the longitudinal force friction coefficient ratio computing section 58 (friction coefficient ratio computing section).

According to this configuration, the driving of the electric motor 11 is controlled based on the longitudinal force friction coefficient ratios (first friction coefficient ratios) computed according to the characteristics of the first directional tire forces. Thus, a travelling that suppresses a decrease in the work efficiency while ensuring safety is possible even in a state in which the road surface is slippery in a travelling path of a straight line section in which acceleration and deceleration occur.

In addition, the dump truck 1 (electrically driven hauling vehicle) according to the foregoing first embodiment includes the rear suspensions 16 (first suspensions) provided between the plurality of rear wheels 4 (driving wheels) and the vehicle body frame 2 and the front suspensions 15 (second suspensions) provided between the plurality of front wheels 3 (driven wheels) and the vehicle body frame 2. The rear suspensions 16 (first suspensions) and the front suspensions 15 (second suspensions) include a hydraulic cylinder filled with a hydraulic operating fluid. Further, the wheel load sensor is the pressure sensors 31 that sense the pressure of the hydraulic operating fluid in the hydraulic cylinders 15 and 16.

According to this configuration, the wheel loads are computed directly from the pressures sensed by the pressure sensors 31. The wheel loads can therefore be obtained more accurately than in a case of a configuration that estimates the wheel loads that vary greatly. Hence, the use of the accurate wheel loads makes it possible to compute an index that enables the slipperiness of the road surface to be determined accurately.

In addition, the dump truck 1 (electrically driven hauling vehicle) according to the foregoing second embodiment includes: the yaw rate sensor 36 that senses the yaw angular velocity of the dump truck 1 (electrically driven hauling vehicle); the lateral acceleration sensor 37 that senses the lateral acceleration as an acceleration in a direction orthogonal to the forward-rearward direction of the dump truck 1 (electrically driven hauling vehicle); and the steering angle sensor 38 that senses the steering angle of the steering mechanism that steers the plurality of front wheels 3 (driven wheels). In addition, the tire force computing section is the second directional tire force computing section 55A that computes each of second directional tire forces as the tire force based on the sensed information of the wheel speed sensors 32 and 33 and the sensed information of the yaw rate sensor 36. The second directional tire forces are frictional forces that occur in directions orthogonal to the rotational planes of the plurality of rear wheels 4 (driving wheels) and the plurality of front wheels 3 (driven wheels). The slip index computing section is the slip angle computing section 56A that computes each of the slip angles of the plurality of rear wheels 4 (driving wheels) and the plurality of front wheels 3 (driven wheels) as the slip index. The slip angles are computed on the basis of the sensed information of the wheel speed sensors 32 and 33, the sensed information of the yaw rate sensor 36, the sensed information of the lateral acceleration sensor 37, and the sensed information of the steering angle sensor 38. The friction coefficient computing section is the second friction coefficient computing section 57A that computes second friction coefficients as the friction coefficient. The second friction coefficients are obtained by dividing the second directional tire forces as a result of the computation of the second directional tire force computing section 55A (tire force computing section) by the wheel loads as the computation result of the wheel load computing section 54. The friction coefficient ratio computing section is the lateral force friction coefficient ratio computing section 58A that computes second friction coefficient ratios as the friction coefficient ratio. The second friction coefficient ratios are obtained by dividing the second friction coefficients as a result of the computation of the second friction coefficient computing section 57A (friction coefficient computing section) by the slip angles as a result of the computation of the slip angle computing section 56A (slip index computing section). The controller 40A is configured to control the driving of the electric motor 11 based on lateral force friction coefficient ratios (second friction coefficient ratios) as a result of the computation of the lateral force friction coefficient ratio computing section 58A (friction coefficient ratio computing section).

According to this configuration, the driving of the electric motor 11 is controlled based on the lateral force friction coefficient ratios (second friction coefficient ratios) computed according to the characteristics of the second directional tire forces. Thus, a travelling that suppresses a decrease in the work efficiency while ensuring safety is possible even in a state in which the road surface is slippery in a travelling path in which turning occurs.

[Modification of First and Second Embodiments]

An electrically driven hauling vehicle according to a modification of the first and second embodiments of the present invention will next be described with reference to FIG. 3 and FIG. 7.

The electrically driven hauling vehicle according to the modification of the first and second embodiments is different from the configurations of the first and second embodiments in that the electrically driven hauling vehicle includes a notifying device 71 and in that the controller 40 or 40A outputs a notification command to the notifying device 71 on the basis of a determination result of the road surface state determination processing section 51 or 51A. In the first and second embodiments, the controller 40 or 40A is configured to perform control to decelerate the travelling of the dump truck 1 when the determination result indicates a slippery state. This suppresses a decrease in the work efficiency while ensuring safety. In this modification, when the determination result indicates that the road surface is slippery, the controller 40 or 40A alerts the operator to safety by notifying the operator that the road surface is in a slippery state by the notifying device 71 in addition to the control for the decelerated travelling of the dump truck 1.

Specifically, as in the first and second embodiments, the road surface state determination processing section 51 of the controller 40 illustrated in FIG. 3 and the road surface state determination processing section 51A of the controller 40A illustrated in FIG. 7 determine the slipperiness of the road surface on the basis of the longitudinal force friction coefficient ratio and the lateral force friction coefficient ratio computed on the basis of the longitudinal tire characteristics and the lateral tire characteristics. When the longitudinal force friction coefficient ratio and the lateral force friction coefficient ratio as a result of the computation are smaller than a determination threshold value (when the road surface state determination processing sections 51 and 51A output a flag indicating that it is determined that the road surface in a slippery state), for example, the road surface state determination processing sections 51 and 51A output a notification command notifying that the road surface is in a slippery state to the notifying device 71. Incidentally, in determining the slipperiness of the road surface, the determination threshold value (determination criterion) for the longitudinal force friction coefficient ratio and the lateral force friction coefficient ratio can be set to be different values between the case of the deceleration control of the electric motor 11 and the case of the output of the notification command to the notifying device 71.

The notifying device 71 is indicated by a broken line as illustrated in FIG. 3 and FIG. 7. The notifying device 71 is electrically connected to the controller 40 or the controller 40A. The notifying device 71 notifies that the road surface is slippery. The notifying device 71 can have a configuration for making a visual notification or a configuration for making an auditory notification. The notifying device 71 can, for example, have a configuration using a visual method such as displaying, within a meter cluster, a warning display indicating that the road surface is slippery or issuing a warning through light, color, or the like by lighting a lamp or the like. The notifying device 71 can also have a configuration using an auditory method such as sounding a warning sound or making a notification by voice or the like. Further, the notifying device 71 can have a configuration combining a configuration for making a visual notification and a configuration for making an auditory notification. The notifying device 71 issues the above-described visual or auditory notification when the notification command from the controller 40 or 40A is input thereto.

The dump truck 1 (electrically driven hauling vehicle) according to the present modification described above includes the notifying device 71 that notifies that the road surface is slippery. In addition, the controller 40 or 40A is configured to drive the notifying device 71 when the first friction coefficient ratio or the second friction coefficient ratio as the computation result of the longitudinal force friction coefficient ratio computing section 58 or the lateral force friction coefficient ratio computing section 58A (friction coefficient ratio computing section) is smaller than a preset threshold value.

According to this configuration, the notifying device 71 can directly notify the operator that the road surface is in a slippery state. This notification makes the operator pay attention to the road surface state, and can therefore guide the operator to voluntarily decelerate the travelling of the dump truck 1.

[Third Embodiment]

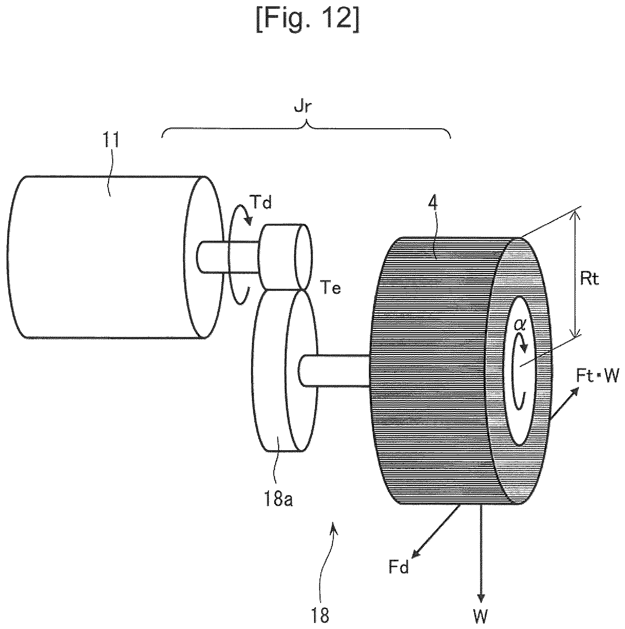

An electrically driven hauling vehicle according to a third embodiment of the present invention will next be described with reference to FIG. 3 and FIG. 12. FIG. 12 is an explanatory diagram illustrating a power transmitting mechanism from an electric motor to a driving wheel in the electrically driven hauling vehicle according to the third embodiment of the present invention, and illustrating a force that occurs in the driving wheel. Incidentally, in FIG. 12, the same reference numerals as the reference numerals illustrated in FIGS. 1 to 11 represent similar parts, and therefore detailed description thereof will be omitted.

The electrically driven hauling vehicle according to the third embodiment is different from the configuration of the first embodiment in that a method of computing a first directional tire force (longitudinal force of a tire) in a first directional tire force computing section 55B of a controller 40B is different.

The first directional tire force computing section 55 of the controller 40 according to the first embodiment is configured to compute the first directional tire force (longitudinal force of the tire) directly from the driving torque of the electric motor 11 obtained on the basis of the sensed information of the voltage sensor 34 and the current sensor 35. However, to be exact, not all of the driving torque of the electric motor 11 is transmitted to the rear wheel 4 and occurs as the tire force in the first direction (longitudinal force of the tire). At this time, there occur a moment of inertia and a friction of the power transmitting mechanism transmitting power from the electric motor 11 to the rear wheel 4, a rolling resistance, and the like. The driving torque of the electric motor 11 is therefore consumed also by these resistance components. That is, the computing method by the first directional tire force computing section 55 according to the first embodiment causes an error of the above-described resistance components in the computation result of the first directional tire force (longitudinal force of the tire).

Accordingly, the first directional tire force computing section 55B of the controller 40B according to the present embodiment is configured to compute the first directional tire force (longitudinal force of the tire) with consideration given to the above-described resistance components on the basis of a model of the power transmitting mechanism. For example, a model 18 illustrated in FIG. 12 is considered as the power transmitting mechanism. The power transmitting mechanism 18 is configured to transmit the power of the electric motor 11 to the rear wheel 4 via a gear 18a.

In this case, the first directional tire force (longitudinal force of the tire) Fd is expressed as the following Equation (5), for example.

$$Fd = Te \ (1/Rt \ (Td - Jr{\cdot}\alpha) - Ft{\cdot}W) \ ... \ Equation \ (5)$$

In Equation (5), Td denotes the driving torque of the electric motor 11, W denotes a wheel load, and $\alpha$ denotes the rotational angular acceleration of the tire (rear wheel 4). In addition, Te denotes transmission efficiency of the gear 18a, Rt denotes the radius of the tire (rear wheel 4), Jr denotes the moment of inertia of the power transmitting mechanism (the electric motor 11, the rear wheel 4, and the gear 18a), and Ft denotes a rolling resistance coefficient per load.

As in the first embodiment, the driving torque Td of the electric motor 11 is computed on the basis of the sensed information of the voltage sensor 34 and the current sensor 35. The computation result of the wheel load computing section 54 can be used as the wheel load W (output of alternate long and short dashed lines from the wheel load computing section 54 in FIG. 3). A difference in the sensed information of the wheel speed sensor 33 can be used as the rotational angular acceleration $\alpha$ of the tire (rear wheel 4) (output of alternate long and short dashed lines from the wheel speed sensor 33 in FIG. 3). In addition, the gear transmission efficiency Te, the radius Rt of the tire (rear wheel 4), the moment of inertia Jr, and the rolling resistance coefficient Ft are stored in the storage device 41 in advance.

Thus, the present embodiment computes the first directional tire force (longitudinal force of the tire) on the basis of the rotation model in which consideration is given to the moment of inertia and the friction of the wheel rotation system and the rolling resistance of the tire. An accurate computation of the first directional tire force (longitudinal force of the tire) is therefore possible without depending on driving conditions with large speed variations or conditions such as a road surface whose road surface state is not steadily good and that has a high rolling resistance.

The dump truck 1 (electrically driven hauling vehicle) according to the foregoing third embodiment includes the power transmitting mechanism 18 that transmits the power of the electric motor 11 to the rear wheels 4 (driving wheels). In addition, the tire force computing section of the controller 40B is the first directional tire force computing section 55B that computes the first directional tire forces on the basis of the wheel loads as the computation result of the wheel load computing section 54, the rolling resistance coefficient Ft per unit load, the driving torque of the electric motor 11, and the moment of inertia Jr of the power transmitting mechanism 18.

According to this configuration, an index indicating the slipperiness of the road surface can be computed accurately by computing the first directional tire forces in consideration of the resistances that occur at the time of the driving of the rear wheels.

[Fourth Embodiment]

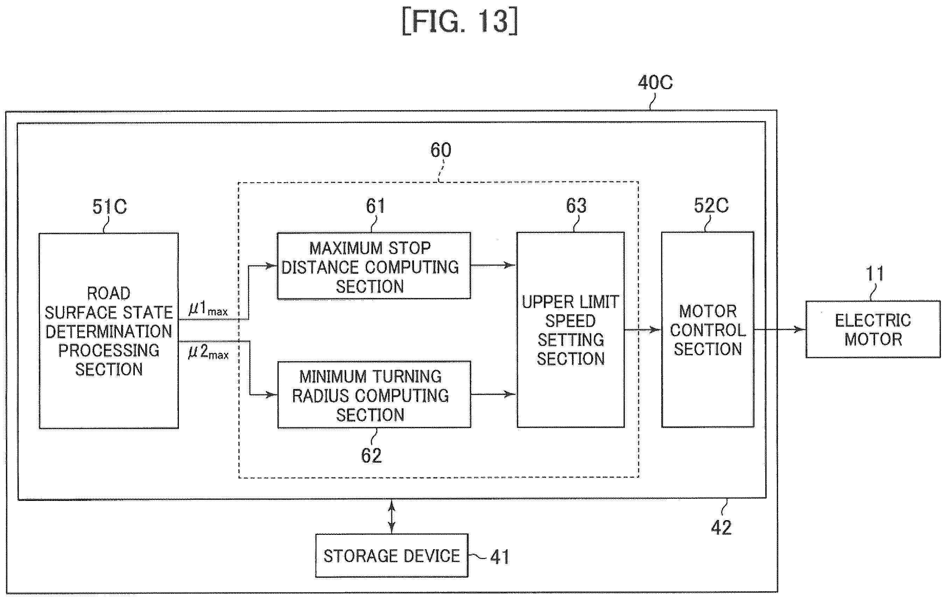

An electrically driven hauling vehicle according to a fourth embodiment of the present invention will next be described with reference to FIG. 13. FIG. 13 is a block diagram illustrating a configuration of functional sections of a controller in the electrically driven hauling vehicle according to the fourth embodiment of the present invention. Incidentally, in FIG. 13, the same reference numerals as the reference numerals illustrated in FIGS. 1 to 12 represent similar parts, and therefore detailed description thereof will be omitted.

The electrically driven hauling vehicle according to the fourth embodiment is different from the configurations of the first and second embodiments in that a controller 40C is configured to set an upper limit value of the travelling speed at which travelling can be performed safely by using the first maximum friction coefficient that can be estimated from the longitudinal force friction coefficient ratio computed on the basis of the longitudinal tire characteristics and the second maximum friction coefficient that can be estimated from the lateral force friction coefficient ratio computed on the basis of the lateral tire characteristics, and control the driving of the electric motor 11 such that the travelling speed of the dump truck 1 does not exceed the upper limit value. In a state in which the road surface is slippery, there is a fear of the occurrence of such travelling instability that a stop distance is increased or the turning of a curve cannot be performed completely. This is caused because the slippery state of the road surface limits the magnitudes of maximum values of the tire force in the first direction and the second direction (the longitudinal force and the lateral force). Accordingly, the present embodiment computes upper limits of the first directional tire force (longitudinal force) at the time of deceleration and the second directional tire force (lateral force) at the time of turning by using the maximum friction coefficients of the road surface and the vehicle weight, and sets the upper limit value of the travelling speed according to the upper limits as a result of the computation.

Specifically, the controller 40C includes: a road surface state determination processing section 51C that has functional sections similar to those of the functional sections of both of the road surface state determination processing section 51 in the first embodiment and the road surface state determination processing section 51A in the second embodiment; a travelling upper limit setting processing section 60 that sets the upper limit of the travelling speed of the dump truck 1 by using the maximum friction coefficients of the road surface estimated by the road surface state determination processing section 51C; and a motor control section 52C that controls the driving of the electric motor 11 by using the upper limit of the travelling speed set by the travelling upper limit setting processing section 60.

As with the road surface state determination processing section 51 in the first embodiment, the road surface state determination processing section 51C estimates the maximum friction coefficient μ1max of the road surface with regard to the first directional tire force F1 (longitudinal force) from the longitudinal force friction coefficient ratio computed by the longitudinal force friction coefficient ratio computing section 58 (see FIG. 3) on the basis of the longitudinal tire characteristics. Further, as in the road surface state determination processing section 51A in the second embodiment, the maximum friction coefficient μ2max of the road surface with regard to the second directional tire force F2 (lateral force) is estimated from the lateral force friction coefficient ratio computed by the lateral force friction coefficient ratio computing section 58A (see FIG. 7) on the basis of the lateral tire characteristics. The road surface state determination processing section 51C outputs the maximum friction coefficient μ1max of the road surface with regard to the first directional tire force F1 (longitudinal force) as an estimation result to a maximum stop distance computing section 61 to be described later in the travelling upper limit setting processing section 60. In addition, the maximum friction coefficient μ2max of the road surface with regard to the second directional tire force F2 (lateral force) as an estimation result is output to a minimum turning radius computing section 62 to be described later in the travelling upper limit setting processing section 60.

The travelling upper limit setting processing section 60 includes: the maximum stop distance computing section 61 that computes a maximum stop distance as a maximum value of a distance necessary to stop the travelling of the dump truck 1; the minimum turning radius computing section 62 that computes a minimum turning radius at which the occurrence of a predetermined amount of slip or more can be avoided during the turning travelling of the dump truck 1; and an upper limit speed setting section 63 that computes the upper limit value of the travelling speed of the dump truck 1 on the basis of a result of the computation of the maximum stop distance computing section 61 and a result of the computation of the minimum turning radius computing section 62.

The maximum stop distance computing section 61 computes the vehicle weight of the dump truck 1 from the sensed information of the pressure sensors 31 (see FIG. 3), and computes the vehicle speed from the sensed information of the wheel speed sensors 32 (see FIG. 3). Further, an upper limit value of the first directional tire force F1 (longitudinal force) at the time of deceleration is computed by using the vehicle weight as a computation result and the maximum friction coefficient μ1max of the road surface with regard to the first directional tire force F1 (longitudinal force) as an estimation result of the road surface state determination processing section 51C. An upper limit value of deceleration can be obtained on the basis of the upper limit value of the first directional tire force F1 (longitudinal force). Further, the maximum stop distance is computed by using the vehicle speed and the upper limit value of deceleration as computation results. The maximum stop distance computing section 61 outputs the maximum stop distance as a result of the computation to the upper limit speed setting section 63.

The minimum turning radius computing section 62 computes the vehicle weight of the dump truck 1 from the sensed information of the pressure sensors 31, computes the vehicle speed from the sensed information of the wheel speed sensors 32, and computes a turning radius from the sensed information of the steering angle sensor 38 (see FIG. 7). A maximum lateral force as an upper limit value of the second directional tire force F2 (lateral force) at the time of turning is computed by using the vehicle weight as a computation result and the maximum friction coefficient μ2max of the road surface with regard to the second directional tire force F2 (lateral force) as an estimation result of the road surface state determination processing section 51C. Further, the minimum turning radius is computed by using a centripetal force obtained on the basis of the vehicle weight, the vehicle speed, and the turning radius as computation results and the maximum lateral force as a computation result. The minimum turning radius computing section 62 outputs the minimum turning radius and the maximum lateral force as computation results to the upper limit speed setting section 63.

The upper limit speed setting section 63 sets an upper limit speed at the time of rectilinear travelling of the dump truck 1 on the basis of the maximum stop distance as the computation result of the maximum stop distance computing section 61. In addition, the upper limit speed setting section 63 sets an upper limit speed at the time of turning travelling of the dump truck 1 on the basis of the minimum turning radius and the maximum lateral force as the computation results of the minimum turning radius computing section 62.

The motor control section 52C controls the driving of the electric motor 11 by using the upper limit speed at the time of the rectilinear travelling of the dump truck 1 and the upper limit speed at the time of the turning travelling of the dump truck 1, which upper limit speeds are set by the upper limit speed setting section 63. That is, the electric motor 11 is controlled such that the travelling speed of the dump truck 1 does not exceed the upper limit speed at the time of the rectilinear travelling and the upper limit speed at the time of the turning travelling.

In the fourth embodiment described above, the controller 40C is configured to estimate the maximum friction coefficients $\mu1max$ and $\mu2max$ of the road surface from the friction coefficient ratios as the computation results of the longitudinal force friction coefficient ratio computing section 58 and the lateral force friction coefficient ratio computing section 58A (friction coefficient ratio computing section), compute the upper limit value of the travelling speed of the dump truck 1 (electrically driven hauling vehicle) by using the maximum friction coefficients $\mu1max$ and $\mu2max$ as a result of the estimation, and control the driving of the electric motor 11 such that the travelling speed of the dump truck 1 (electrically driven hauling vehicle) does not exceed the upper limit value as a result of the computation.

According to this configuration, the upper limit value of the travelling speed is set on the basis of the estimation results of the maximum friction coefficients $\mu1max$ and $\mu2max$ of the road surface that serve as indexes for determining the slipperiness of the road surface. Thus, a more appropriate speed setting than a conventional travelling speed setting relying on the intuition of a human is made possible. It is thereby possible to balance safety and an improvement in the work efficiency.

[Embodiment of Operation Control System for Electrically Driven Hauling vehicles]

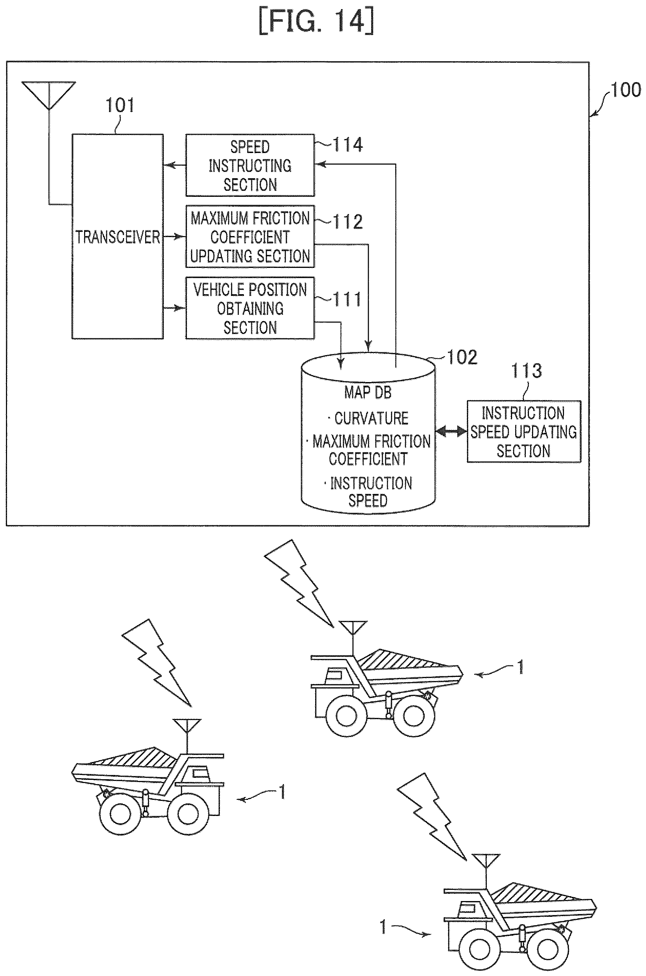

An operation control system for electrically driven hauling vehicles according to an embodiment of the present invention will next be described with reference to FIG. 14. FIG. 14 is a block diagram illustrating a configuration of the operation control system for electrically driven hauling vehicles according to the embodiment of the present invention. Incidentally, in FIG. 14, the same reference numerals as the reference numerals illustrated in FIGS. 1 to 13 represent similar parts, and therefore detailed description thereof will be omitted.

At a mine site, a large number of hauling vehicles operate, and there are generally a plurality of excavation positions as loading places and dumping places. Therefore, an operation control system generally operates such that the hauling vehicles can travel between these places and to necessary places in appropriate timings.

One of basic functions of the operation control system for the hauling vehicles is to present, to the operator of each vehicle, an instruction as to through which path the vehicle is to travel from which loading place to which dumping place. When the road surface conditions have deteriorated due to bad weather or the like, a speed instruction may be given together with path information. In a case of an extensive mine site in particular, a heavy rain may fall on only a part of the site, and therefore travelling instruction information is important.

In recent years, there have been mine sites adopting an autonomous transportation system in which the operation of the hauling vehicles is unmanned and automated. The importance of the operation control system is increased at such a site. For example, even in a case where each vehicle is travelling at a command speed defined on a transport path map during a normal time, when a control person obtains bad weather information about a rainfall or the like, the control person may give an instruction on reduced-speed operation uniformly or after setting a section within the site in order to maintain safety. In this case, the control person operating the operation control system in a control room does not know how much the road surface conditions have deteriorated, and therefore may issue a command for a slightly lower speed on a safe side while referring to past experience or the like. However, when a command for a low speed is issued, a transportation time becomes longer than usual, and thus a transportation amount per unit time, which represents the work efficiency, is significantly decreased.

On the other hand, when the road surface conditions can be grasped accurately even in a case of bad weather, a decrease in the work efficiency can be suppressed by a command for an appropriate speed without giving an instruction on deceleration more than necessary. The electrically driven hauling vehicle according to the foregoing embodiment can accurately grasp the road surface state (slipperiness of the road surface) on the basis of the longitudinal force friction coefficient ratio computed on the basis of the longitudinal tire characteristics and the lateral force friction coefficient ratio computed on the basis of the lateral tire characteristics. It is preferable not only, for each vehicle as the electrically driven hauling vehicle according to the foregoing embodiment, to individually use the indexes of the slipperiness of the road surface but also to use the information about the road surface state while increasing the accuracy of the information about the road surface state by integrating these indexes computed by each vehicle in the operation control system.

Accordingly, the operation control system for electrically driven hauling vehicles according to the present embodiment is configured to accurately grasp the road surface state (slipperiness of the road surface) of the travelling path in which each electrically driven hauling vehicle is travelling by collecting the maximum friction coefficients of the road surface as indexes that enable the slipperiness of the road surface to be determined from the plurality of electrically driven hauling vehicles according to the foregoing embodiment, and then notify each electrically driven hauling vehicle of a speed command corresponding to the road surface state.

Specifically, an operation control system 100 according to the present embodiment controls the operation of the plurality of electrically driven hauling vehicles according to the foregoing embodiment in a centralized manner, and is, for example, a server as an information processing device capable of sending and receiving various kinds of information on the dump trucks 1. Here, the dump trucks 1 according to the foregoing embodiment include a configuration that estimates the first maximum friction coefficient $\mu 1max$ of the road surface on the basis of the longitudinal force friction coefficient ratio as a computation result or a configuration that estimates the second maximum friction coefficient $\mu 2max$ of the road surface on the basis of the lateral force friction coefficient ratio as a computation result, and is configured to notify the operation control system 100 of the first maximum friction coefficient $\mu 1max$ and the second maximum friction coefficient $\mu 2max$ as estimation results in association with the positional information on the respective dump trucks 1. Further, travelling thereof is assumed to be controlled according to a speed instruction from the operation control system 100.

The operation control system 100 includes: a transceiver 101 that transmits and receives various kinds of information to and from the plurality of dump trucks 1; and a map database 102 (hereinafter referred to as a map DB) that stores map information related to a travelling path (transport path) (for example, the position, curvature, and the like of the travelling path) on the mine site (field) where the plurality of dump trucks 1 are operated. The operation control system 100 further includes functional sections including a vehicle position obtaining section 111, a maximum friction coefficient updating section 112, an instruction speed updating section 113, and a speed instructing section 114.

The transceiver 101 receives the positional information on the respective dump trucks 1 and the maximum friction coefficients $\mu 1max$ and $\mu 2max$ of the road surface associated with the information from the respective dump trucks 1. In addition, the transceiver 101 transmits speed instructions to be described later from the speed instructing section 114 to the respective dump trucks 1.

The vehicle position obtaining section 111 obtains the positional information notified from each dump truck 1, and identifies which part of the travelling path in the map information of the map DB 102 this positional information represents.

The maximum friction coefficient updating section 112 obtains the maximum friction coefficients $\mu 1max$ and $\mu 2max$ of the road surface notified from each dump truck 1, and performs an update to latest information by associating the maximum friction coefficients $\mu 1max$ and $\mu 2max$ of the road surface with the part (position) identified by the vehicle position obtaining section 111 in the map information of the map DB 102.

When the maximum friction coefficients $\mu 1max$ and $\mu 2max$ of the road surface associated with the map information of the map DB 102 are updated by the maximum friction coefficient updating section 112, the instruction speed updating section 113 computes an instruction speed on the basis of the updated latest maximum friction coefficients $\mu 1max$ and $\mu 2max$ of the road surface, and performs an update to latest information by associating the instruction speed as a result of the computation with the relevant part in the map information of the map DB 102 again. The instruction speed updating section 113 can be configured to, for example, compute the maximum stop distance as a maximum value of a distance necessary to stop the travelling of the dump truck 1 on the basis of the maximum friction coefficient $\mu 1max$ of the road surface with regard to the first directional tire force F1 (longitudinal force), compute the upper limit value of the travelling speed by using the maximum stop distance as a result of the computation, and set the upper limit value as a result of the computation as the instruction speed. In addition, a configuration is possible in which the instruction speed updating section 113 computes the minimum turning radius at which the occurrence of a predetermined amount of slip or more can be avoided during the turning travelling of the dump truck 1 on the basis of the maximum friction coefficient $\mu 2max$ of the road surface with regard to the second directional tire force F2 (lateral force), computes the upper limit value of the travelling speed by using the minimum turning radius as a result of the computation, and sets the upper limit value as a result of the computation as the instruction speed.

When the vehicle position obtaining section 111 obtains positional information notified from each dump truck 1, the speed instructing section 114 extracts the instruction speed associated with the part corresponding to the positional information on each dump truck 1 in the map information of the map DB 102, and transmits the extracted instruction speed to each dump truck 1 via the transceiver 101.

In the present embodiment, the positional information on the vehicles and information about the maximum friction coefficients $\mu 1max$ and $\mu 2max$ as indexes of the slipperiness of the road surface, which are notified from the plurality of dump trucks 1, are stored in association with the map in the map DB 102. In addition, the instruction speed is computed on the basis of the maximum friction coefficients $\mu 1max$ and $\mu 2max$ associated with the map information of the map DB 102, and the instruction speed as a result of the computation is associated with the map information of the map DB 102. Therefore, a hauling vehicle that next travels in the relevant travelling path can obtain the road surface state in advance. In addition, even in a case of a road surface state that is different only in a specific section as in local bad weather, the state is reflected in the map information of the map DB 102, and therefore an accurate speed instruction can be issued also to a vehicle that passes through the relevant specific section.

The operation control system 100 for electrically driven hauling vehicles according to the present embodiment described above includes the map database 102 that stores the map information related to a travelling path on a site where the plurality of dump trucks 1 (electrically driven hauling vehicles) are operated. In addition, the plurality of dump trucks 1 (electrically driven hauling vehicles) are configured to estimate the maximum friction coefficients $\mu$1max and $\mu$2max of the road surface by using the longitudinal force friction coefficient ratio and the lateral force friction coefficient ratio (friction coefficient ratio), and notify the operation control system 100 of the maximum friction coefficients $\mu$1max and $\mu$2max as a result of the estimation in association with the positional information on each of the plurality of dump trucks 1 (electrically driven hauling vehicles). Further, the operation control system 100 is configured to compute the upper limit value of the travelling speed by using the map information of the map database 102 and the maximum friction coefficients $\mu$1max and $\mu$2max notified from each of the plurality of dump trucks 1 (electrically driven hauling vehicles) and associated with the positional information, and associate the upper limit value as a result of the computation as a speed limit value of the travelling path corresponding to the positional information with the map information of the map database 102. In addition, the operation control system 100 is configured to refer to the map database 102, and notify a dump truck 1 (electrically driven hauling vehicle), which has notified the operation control system 100 of the positional information, of the upper limit value associated with the travelling path corresponding to this positional information as a limit value of the travelling speed.

According to this configuration, by integrating the maximum friction coefficients $\mu$1max and $\mu$2max as indexes of the slipperiness of the road surface, which are computed by each dump truck 1 (electrically driven hauling vehicle), in the operation control system 100, it is possible to use the information about the road surface state while increasing the accuracy of the information about the road surface state, and thus suppress a decrease in the work efficiency by a command for an appropriate speed without giving an instruction for deceleration more than necessary.

[Other Embodiments]

It is to be noted that the present invention is not limited to the foregoing first to fourth embodiments and the modifications of these embodiments, but includes various modifications. The foregoing embodiments are described in detail to describe the present invention in an easily understandable manner, and are not necessarily limited to embodiments including all of the described configurations. For example, a part of a configuration of a certain embodiment can be replaced with a configuration of another embodiment, and a configuration of another embodiment can be added to a configuration of a certain embodiment. In addition, for a part of a configuration of each embodiment, another configuration can be added, deleted, or substituted.

For example, a modification is possible in which the configuration of the first embodiment and the configuration of the second embodiment described above are combined with each other. That is, an electrically driven hauling vehicle according to the present modification is configured to combine and perform the road surface slipperiness determination processing (processing of the road surface state determination processing section 51) based on the longitudinal tire characteristics with regard to the first directional tire force (longitudinal force), which processing is performed by the controller 40 according to the first embodiment, and the road surface slipperiness determination processing (processing of the road surface state determination processing section 51A) based on the lateral tire characteristics with regard to the second directional tire force (lateral force), which processing is performed by the controller 40A according to the second embodiment.

As described earlier, in the road surface slipperiness determination processing, there are ranges of the slip ratio and the slip angle suitable for the relevant determination. When the slipperiness of the road surface is determined in a very short certain time interval, the determination using only one of the longitudinal force friction coefficient ratio with regard to the first directional tire force F1 (longitudinal force) and the lateral force friction coefficient ratio with regard to the second directional tire force F2 (lateral force) may be effective. For example, in this time interval, the use of the slip ratio is effective when travelling is performed in a straight line travelling path. On the other hand, the use of the slip angle is effective when a turning travelling is performed in an arcuate travelling path. In the autonomous transportation system described above, in particular, it is often that acceleration or deceleration is performed in a straight line section, while travelling is performed at a constant speed during turning. Thus, only one of the longitudinal force friction coefficient ratio computed on the basis of the longitudinal tire characteristics and the longitudinal force friction coefficient ratio computed on the basis of the lateral tire characteristics may be effective.

Accordingly, the electrically driven hauling vehicle according to the present modification can be configured to compute the slip ratio and the slip angle and compute the longitudinal force friction coefficient ratio and the lateral force friction coefficient ratio as in the controllers 40 and 40A according to the first and second embodiments, select one of the longitudinal force friction coefficient ratio and the lateral force friction coefficient ratio on the basis of the slip ratio and the slip angle as a computation result, and determine the slipperiness of the road surface as in the road surface state determining section 59 of the controller 40 according to the first embodiment or the road surface state determining section 59A of the controller 40A according to the second embodiment according to a result of the selection. Further, a configuration is adopted so as to control the driving of the electric motor 11 according to this result of the determination using one of the longitudinal force friction coefficient ratio and the lateral force friction coefficient ratio.

In addition, even when the slip ratio and the slip angle are within the predetermined ranges, and a determination using both of the longitudinal force friction coefficient ratio and the lateral force friction coefficient ratio is effective, a more accurate determination may be able to be made by selecting one of the longitudinal force friction coefficient ratio and the lateral force friction coefficient ratio and determining the slipperiness of the road surface. For example, it is considered that an accurate determination of the road surface state can be made by selecting one of the slip ratio and the slip angle within the predetermined ranges which one is closer to the upper limit value of the predetermined range (identified by the magnitude of a ratio to the upper limit, for example), and using the friction coefficient ratio of the selected one. This is because the slip ratio and the slip angle are denominators of the longitudinal force friction coefficient ratio and the lateral force friction coefficient ratio, and when the slip ratio and the slip angle are within the predetermined ranges but are small values, computation errors and the like of the slip ratio and the slip angle greatly affect the longitudinal force friction coefficient ratio and the lateral force friction coefficient ratio.

In the electrically driven hauling vehicle according to the present modification described above, the controller 40 or 40A is configured to select one of the longitudinal force friction coefficient ratio (first friction coefficient ratio) and the lateral force friction coefficient ratio (second friction coefficient ratio) as the computation results of the friction coefficient ratio computing sections on the basis of the slip ratio and the slip angle, and control the driving of the electric motor 11 on the basis of the selected one.

According to this configuration, travelling can be controlled by using an appropriate index of the slipperiness of the road surface even in a case where a determination using only one of the longitudinal force friction coefficient ratio with regard to the first directional tire force F1 (longitudinal force) and the lateral force friction coefficient ratio with regard to the second directional tire force F2 (lateral force) is effective.

In addition, the foregoing embodiments illustrate an example of a configuration in which the pressure sensors 31 of the front suspensions 15 and the rear suspensions 16 function as a wheel load sensor. However, the wheel load sensor is not limited to the pressure sensors 31 of the front suspensions 15 and the rear suspensions 16, but is optional as long as the wheel load sensor is a sensor capable of sensing the wheel loads of the front wheels 3 and the rear wheels 4.

In addition, the respective functions of the controllers 40, 40A, 40B, and 40C in the foregoing embodiments may be implemented by hardware by designing a part or all of these functions in an integrated circuit, for example.

Description of Reference Characters

1: dump truck (electrically driven hauling vehicle)
2: vehicle body frame
3: front wheel (driven wheel)
4: rear wheel (driving wheel)
11: electric motor
15: front suspension (second suspension)
16: rear suspension (first suspension)
18: power transmitting mechanism
31: pressure sensor (wheel load sensor)
32, 33: wheel speed sensor
36: yaw rate sensor
37: lateral acceleration sensor
38: steering angle sensor
40, 40A, 40B, 40C: controller
54: wheel load computing section
55: first directional tire force computing section (tire force computing section)
55A: second directional tire force computing section (tire force computing section)
56: slip ratio computing section (slip index computing section)
56A: slip angle computing section (slip index computing section)
57: first friction coefficient computing section (friction coefficient computing section)
57A: second friction coefficient computing section (friction coefficient computing section)
58: longitudinal force friction coefficient ratio computing section (friction coefficient ratio computing section)
58A: lateral force friction coefficient ratio computing section (friction coefficient ratio computing section)
71: notifying device
100: operation control system
102: map database

**Claims**

1. An electrically driven hauling vehicle comprising:

   a plurality of driving wheels and a plurality of driven wheels;
   a wheel speed sensor that senses each of rotational speeds of the plurality of driving wheels and the plurality of driven wheels;
   an electric motor that drives the plurality of driving wheels; and
   a controller that controls the electric motor,

   wherein

   the electrically driven hauling vehicle includes a wheel load sensor that senses each of pieces of information on wheel loads as loads applied in a vertical direction to the plurality of driving wheels and the plurality of driven wheels,
   the controller has functional sections including

      a wheel load computing section configured to compute the wheel load based on the information sensed by the wheel load sensor,
      a tire force computing section configured to compute a tire force as a frictional force that occurs against at least one of the plurality of driving wheels and the plurality of driven wheels on a road surface,
      a slip index computing section configured to compute a slip index indicating a degree of slipping that occurs at at least one of the plurality of driving wheels and the plurality of driven wheels,
      a friction coefficient computing section configured to compute a friction coefficient by dividing the tire force as a result of the computation of the tire force computing section by the wheel load as a result of the computation of the wheel load computing section, and
      a friction coefficient ratio computing section configured to compute a friction coefficient ratio by dividing the friction coefficient as a result of the computation of the friction coefficient computing section by the slip index as a result of the computation of the slip index computing section, and

   the controller controls the driving of the electric motor based on the friction coefficient ratio as a result of the computation of the friction coefficient ratio computing section.

2. The electrically driven hauling vehicle according to claim 1, wherein

   the tire force computing section is configured to compute each of first directional tire forces as the tire force, the first directional tire forces being frictional forces that occur against the plurality of driving wheels in a longitudinal direction of an orientation of the plurality of driving wheels,
   the slip index computing section is configured to compute each of slip ratios of the plurality of driving wheels as the slip index, the slip ratios being computed based on the rotational speeds of the plurality of driving wheels and the rotational speeds of the plurality of driven wheels sensed by the wheel speed sensor,
   the friction coefficient computing section is configured to compute first friction coefficients as the friction coefficient, the first friction coefficients being obtained by dividing the first directional tire forces as a result of the computation of the tire force computing section by the wheel loads as the computation result of the wheel load computing section,
   the friction coefficient ratio computing section is configured to compute first friction coefficient ratios as the friction coefficient ratio, the first friction coefficient ratios being obtained by dividing the first friction coefficients as a result of the computation of the friction coefficient computing section by the slip ratios as a result of the computation of the slip index computing section, and
   the controller controls the driving of the electric motor based on the first friction coefficient ratios as a result of the computation of the friction coefficient ratio computing section.

3. The electrically driven hauling vehicle according to claim 2, comprising a power transmitting mechanism that transmits power of the electric motor to the driving wheels, wherein
   the tire force computing section is configured to compute the first directional tire forces based on the wheel loads as the computation result of the wheel load computing section, a rolling resistance coefficient per unit load, driving torque of the electric motor, and moment of inertia of the power transmitting mechanism.

4. The electrically driven hauling vehicle according to claim 1, comprising:

a yaw rate sensor that senses a yaw angular velocity of the electrically driven hauling vehicle;
a lateral acceleration sensor that senses a lateral acceleration as an acceleration in a direction orthogonal to a forward-rearward direction of the electrically driven hauling vehicle; and
a steering angle sensor that senses a steering angle of a steering mechanism that steers the plurality of driven wheels, wherein
the tire force computing section is configured to compute each of second directional tire forces as the tire force based on the information sensed by the wheel speed sensor and the information sensed by the yaw rate sensor, the second directional tire forces being frictional forces that occur in directions orthogonal to rotational planes of the plurality of driving wheels and the plurality of driven wheels,
the slip index computing section is configured to compute each of slip angles of the plurality of driving wheels and the plurality of driven wheels as the slip index, the slip angles being computed based on the information sensed by the wheel speed sensor, the information sensed by the yaw rate sensor, information sensed by the lateral acceleration sensor, and information sensed by the steering angle sensor,
the friction coefficient computing section is configured to compute second friction coefficients as the friction coefficient, the second friction coefficients being obtained by dividing the second directional tire forces as a result of the computation of the tire force computing section by the wheel loads as the computation result of the wheel load computing section,
the friction coefficient ratio computing section is configured to compute second friction coefficient ratios as the friction coefficient ratio, the second friction coefficient ratios being obtained by dividing the second friction coefficients as a result of the computation of the friction coefficient computing section by the slip angles as a result of the computation of the slip index computing section, and
the controller controls the driving of the electric motor based on the second friction coefficient ratios as a result of the computation of the friction coefficient ratio computing section.

5. The electrically driven hauling vehicle according to claim 1, comprising:

a yaw rate sensor that senses a yaw angular velocity of the electrically driven hauling vehicle;
a lateral acceleration sensor that senses a lateral acceleration as an acceleration in a direction orthogonal to a forward-rearward direction of the electrically driven hauling vehicle; and
a steering angle sensor that senses a steering angle of a steering mechanism that steers the plurality of driven wheels, wherein
the tire force computing section is configured to compute each of first directional tire forces as the tire force, the first directional tire forces being frictional forces that occur against the plurality of driving wheels in a longitudinal direction of an orientation of the plurality of driving wheels, and compute each of second directional tire forces as the tire force on a basis of information sensed by the wheel speed sensor and information sensed by the yaw rate sensor, the second directional tire forces being frictional forces that occur in directions orthogonal to rotational planes of the plurality of driving wheels and the plurality of driven wheels,
the slip index computing section is configured to compute each of slip ratios of the plurality of driving wheels as the slip index, the slip ratios being computed on a basis of the rotational speeds of the plurality of driving wheels and the rotational speeds of the plurality of driven wheels sensed by the wheel speed sensor, and compute each of slip angles of the plurality of driving wheels and the plurality of driven wheels as the slip index, the slip angles being computed on a basis of the information sensed by the wheel speed sensor, the information sensed by the yaw rate sensor, information sensed by the lateral acceleration sensor, and information sensed by the steering angle sensor,
the friction coefficient computing section is configured to compute first friction coefficients as the friction coefficient, the first friction coefficients being obtained by dividing the first directional tire forces as a computation result of the tire force computing section by the wheel loads as the computation result of the wheel load computing section, and compute second friction coefficients as the friction coefficient, the second friction coefficients being obtained by dividing the second directional tire forces as a computation result of the tire force computing section by the wheel loads as the computation result of the wheel load computing section,
the friction coefficient ratio computing section is configured to compute first friction coefficient ratios as the friction coefficient ratio, the first friction coefficient ratios being obtained by dividing the first friction coefficients as a computation result of the friction coefficient computing section by the slip ratios as a computation result of the slip index computing section, and compute second friction coefficient ratios as the friction coefficient ratio, the second friction coefficient ratios being obtained by dividing the second friction coefficients as a computation result of the friction coefficient computing section by the slip angles as a computation result of the slip index computing section,

24

and
the controller is configured to

select one of the first friction coefficient ratios and the second friction coefficient ratios as computation results of the friction coefficient ratio computing section on a basis of the slip ratios and the slip angles as the computation results of the slip index computing section, and
control the driving of the electric motor on a basis of the selected one.

6. The electrically driven hauling vehicle according to claim 1, comprising first suspensions provided between the plurality of driving wheels and a vehicle body frame and second suspensions provided between the plurality of driven wheels and the vehicle body frame, wherein

the first suspensions and the second suspensions include a hydraulic cylinder filled with a hydraulic operating fluid, and
the wheel load sensor is a pressure sensor that senses a pressure of the hydraulic operating fluid in the hydraulic cylinder.

7. The electrically driven hauling vehicle according to claim 1, comprising a notifying device that notifies that a road surface is slippery, wherein

the controller causes the notifying device to drive when the friction coefficient ratio as the computation result of the friction coefficient ratio computing section is smaller than a threshold value set in advance.

8. The electrically driven hauling vehicle according to claim 1, wherein
the controller is configured to

estimate a maximum friction coefficient of the road surface from the friction coefficient ratio as the computation result of the friction coefficient ratio computing section,
compute an upper limit value of a travelling speed of the electrically driven hauling vehicle by using the maximum friction coefficient as a result of the estimation, and
control the driving of the electric motor such that the travelling speed of the electrically driven hauling vehicle does not exceed the upper limit value as a result of the computation.

9. An electrically driven hauling vehicle operation control system for controlling operation of a plurality of electrically driven hauling vehicles, the operation control system comprising a map database that stores map information related to a travelling path on a site where the plurality of electrically driven hauling vehicles are operated, wherein

the plurality of electrically driven hauling vehicles are the electrically driven hauling vehicles according to claim 1,
the plurality of electrically driven hauling vehicles are each configured to estimate a maximum friction coefficient of a road surface by using the friction coefficient ratio, and notify the operation control system of the maximum friction coefficient as a result of the estimation in association with positional information on each of the plurality of electrically driven hauling vehicles,
the operation control system is configured to

compute an upper limit of a travelling speed by using the map information of the map database and the maximum friction coefficient notified from each of the plurality of electrically driven hauling vehicles and associated with the positional information, and
associate the upper limit as a result of the computation as a speed limit of a travelling path corresponding to the positional information with the map information of the map database, and

the operation control system is configured to notify an electrically driven hauling vehicle, the electrically driven hauling vehicle having notified the operation control system of the positional information, of the upper limit associated with a travelling path corresponding to the positional information as a limit of the travelling speed by referring to the map database.

[Fig. 1]

[Fig. 2]

[FIG. 3]

EP 4 691 828 A1

[Fig. 4]

[Fig. 5]

[FIG. 6]

```
                    ( START )
                        │
                        ▼
        ┌───────────────────────────────┐
        │     COMPUTE WHEEL LOAD         │──S10
        └───────────────────────────────┘
                        │
                        ▼
        ┌───────────────────────────────┐
        │ COMPUTE FIRST DIRECTIONAL TIRE │──S20
        │ FORCE (LONGITUDINAL FORCE OF   │
        │          TIRE)                 │
        └───────────────────────────────┘
                        │
                        ▼           S30
                   ╱─────────────╲          NO
                  ╱ VEHICLE SPEED ≥ ╲──────────────┐
                  ╲ SPEED THRESHOLD ╱              │
                   ╲    VALUE ?    ╱               │
                        │ YES                      │
                        ▼                          │
        ┌───────────────────────────────┐         │
        │      COMPUTE SLIP RATIO        │──S40    │
        └───────────────────────────────┘         │
                        │           S50            │
                        ▼                          │
                   ╱─────────────╲          NO     │
                  ╱  IS SLIP RATIO ╲──────────────┤
                  ╲ WITHIN PREDETER ╱              │
                   ╲ MINED RANGE?  ╱               │
                        │ YES                      │
                        ▼                          │
        ┌───────────────────────────────┐         │
        │ COMPUTE FIRST FRICTION         │──S60    │
        │      COEFFICIENT               │         │
        └───────────────────────────────┘         │
                        │                          │
                        ▼                          │
        ┌───────────────────────────────┐         │
        │ COMPUTE LONGITUDINAL FORCE     │──S70    │
        │ FRICTION COEFFICIENT RATIO     │         │
        └───────────────────────────────┘         │
                        │                          │
                        ▼                          │
        ┌───────────────────────────────┐         │
        │ DETERMINE SLIPPERINESS OF ROAD │──S80    │
        │ SURFACE (ROAD SURFACE STATE)   │         │
        └───────────────────────────────┘         │
                        │◄─────────────────────────┘
                        ▼
                    (  END  )
```

[FIG. 7]

[Fig. 8]

[Fig. 9]

[Fig. 10]

[FIG. 11]

```
                        ┌──────────┐
                        │  START   │
                        └────┬─────┘
                             │
              ┌──────────────▼──────────────┐
              │     COMPUTE WHEEL LOAD       │──── S10
              └──────────────┬──────────────┘
                             │
     ┌───────────────────────▼───────────────────────┐
     │  COMPUTE SECOND DIRECTIONAL TIRE               │──── S20A
     │  FORCE (LATERAL FORCE OF TIRE)                 │
     └───────────────────────┬───────────────────────┘
                             │            S30A
                        ◇────▼────◇
                   ╱   LATERAL        ╲         NO
           ◇──────  ACCELERATION ≥ ACCELERATION ──────┐
                   ╲  THRESHOLD VALUE? ╱               │
                        ◇────┬────◇                    │
                             │ YES                      │
              ┌──────────────▼──────────────┐          │
              │      COMPUTE SLIP ANGLE      │── S40A   │
              └──────────────┬──────────────┘          │
                             │           S50A           │
                        ◇────▼────◇                     │
                   ╱    IS SLIP ANGLE  ╲        NO      │
           ◇────── WITHIN PREDETERMINED ──────┐         │
                   ╲    RANGE?          ╱      │         │
                        ◇────┬────◇            │         │
                             │ YES             │         │
     ┌───────────────────────▼───────────────────────┐  │
     │  COMPUTE SECOND FRICTION COEFFICIENT           │── S60A
     └───────────────────────┬───────────────────────┘  │
                             │                           │
     ┌───────────────────────▼───────────────────────┐  │
     │  COMPUTE LATERAL FORCE FRICTION                │── S70A
     │  COEFFICIENT RATIO                             │  │
     └───────────────────────┬───────────────────────┘  │
                             │                           │
     ┌───────────────────────▼───────────────────────┐  │
     │  DETERMINE SLIPPERINESS OF ROAD                │── S80A
     │  SURFACE (ROAD SURFACE STATE)                  │  │
     └───────────────────────┬───────────────────────┘  │
                             │◄──────────────────────────┘
                             │◄──────────────────────────┘
                        ┌────▼─────┐
                        │   END    │
                        └──────────┘
```

[Fig. 12]

[FIG. 13]

# [FIG. 14]

## INTERNATIONAL SEARCH REPORT

| International application No. |
| --- |
| **PCT/JP2024/000875** |

**A. CLASSIFICATION OF SUBJECT MATTER**

**B60L 15/20**(2006.01)i; **B60L 9/18**(2006.01)i; **B60W 40/068**(2012.01)i
FI: B60L15/20 Y; B60L9/18 S; B60W40/068

According to International Patent Classification (IPC) or to both national classification and IPC

**B. FIELDS SEARCHED**

Minimum documentation searched (classification system followed by classification symbols)

B60L15/20; B60L9/18; B60W40/068

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2013-225975 A (HITACHI CONSTRUCTION MACHINERY CO., LTD.) 31 October 2013 (2013-10-31) | 1-3, 6-8 |
| | paragraphs [0026]-[0098], fig. 1-19 | |
| A | | 4-5, 9 |
| Y | JP 2005-207953 A (TOYOTA JIDOSHA KABUSHIKI KAISHA) 04 August 2005 (2005-08-04) | 1-3, 6-8 |
| | paragraph [0046] | |
| Y | JP 2022-150684 A (HITACHI CONSTRUCTION MACHINERY CO., LTD.) 07 October 2022 (2022-10-07) | 6 |
| | paragraph [0029] | |
| A | JP 2014-231284 A (TOYOTA JIDOSHA KABUSHIKI KAISHA) 11 December 2014 (2014-12-11) | 1-9 |
| | entire text, all drawings | |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 March 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/000875** |

**C.** **DOCUMENTS CONSIDERED TO BE RELEVANT**

| Category* | Citation of document, with indication, where appropriate, of the relevant passages | Relevant to claim No. |
| --- | --- | --- |
| A | WO 2016/051501 A1 (HITACHI CONSTRUCTION MACHINERY CO., LTD.) 07 April 2016 (2016-04-07) <br> entire text, all drawings | 1-9 |

Form PCT/ISA/210 (second sheet) (July 2022)

**INTERNATIONAL SEARCH REPORT**
Information on patent family members

International application No.

**PCT/JP2024/000875**

| Patent document cited in search report | | | Publication date (day/month/year) | Patent family member(s) | | | Publication date (day/month/year) |
|---|---|---|---|---|---|---|---|
| JP | 2013-225975 | A | 31 October 2013 | US paragraphs [0045]-[0120], fig. 1-19 WO | 2015/0298577 2013/157484 | A1 A1 | |
| JP | 2005-207953 | A | 04 August 2005 | (Family: none) | | | |
| JP | 2022-150684 | A | 07 October 2022 | US paragraph [0042] WO CN | 2023/0227021 2022/201827 116034062 | A1 A1 A | |
| JP | 2014-231284 | A | 11 December 2014 | (Family: none) | | | |
| WO | 2016/051501 | A1 | 07 April 2016 | US EP CA | 2017/0015322 3203340 2940808 | A1 A1 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012116360 A